(19) Europäisches Patentamt
European Patent Office
Office européen des brevets

(11) **EP 2 117 158 A1**

(12) **EUROPEAN PATENT APPLICATION**
published in accordance with Art. 153(4) EPC

(43) Date of publication:
**11.11.2009 Bulletin 2009/46**

(51) Int Cl.:
*H04L 9/14* (2006.01)　　　*H04L 9/26* (2006.01)

(21) Application number: **07860570.6**

(22) Date of filing: **26.12.2007**

(86) International application number:
**PCT/JP2007/075375**

(87) International publication number:
**WO 2008/081974 (10.07.2008 Gazette 2008/28)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.12.2006 JP 2006356595**

(71) Applicant: **N-Crypt, Inc.**
**Yokkaichi-shi, Mie 512-8044 (JP)**

(72) Inventor: **NAKAMURA, Takatoshi**
**Yokkaichi-shi**
**Mie 512-8044 (JP)**

(74) Representative: **Skone James, Robert Edmund**
**Gill Jennings & Every LLP**
**Broadgate House**
**7 Eldon Street**
**London EC2M 7LH (GB)**

(54) **DECODING PROCESSING DEVICE, DATA PROCESSING METHOD AND COMPUTER PROGRAM**

(57)　Encrypted data is prevented from being decrypted to avoid data leakage. The encrypted data obtained by encrypting data to be processed corresponds to an enumeration of header data (501) and multiple pieces of divisional encrypted data (502). A decryption processing apparatus decrypts the encrypted data obtained in an encrypting processing apparatus. For the decryption, the decryption processing apparatus uses a solution used for encrypting the data to obtain the encrypted data in the encryption processing apparatus and a file name of the encrypted data. In the present invention, an area in the header data (501) corresponding to a file name, in which the file name of the encrypted data is recorded, is deleted or overwritten at appropriate timing to be destroyed, thereby preventing the encrypted data from being decrypted.

EP 2 117 158 A1

(A)

| HEADER DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA |
|---|---|---|---|---|---|---|---|---|---|---|---|
| 501 | 502 | 502 | 502 | 502 | 502 | 502 | 502 | 502 | 502 | 502 | 502 |

(B)

FIG. 4

**Description**

Technical Field

The present invention relates to a technique for reducing the risk of data leakage.

Background of the Invention

The demands on security are growing everyday.

Data is leaked in various ways. For example, data is leaked from a computer connected to a network environment by unauthorized access or an interruption to a communication path. When data is recorded on a recording medium included in a computer or a portable recording medium, data leakage occurs from a stolen computer or portable recording medium.

Specifically, data is constantly exposed to the risk of leakage as long as it exists.

In view of such a risk, it is preferred that data be deleted immediately after the use or as soon as it is no longer needed. However, it is troublesome for users to take such an extra effort. Moreover, data deletion performed on a computer by a general processing merely deletes data in a file management area. Since the content of data (more precisely, of a file) itself remains in a hard disk in most cases, it is difficult to completely delete the data. It is certain that there exists software for writing data "0" or "1" over a data string of existing data to completely delete the existing data for the purpose of completely deleting the data on a hard disk (more precisely, the existing data is turned into completely nonsignificant data or a sort of "dust" data). However, since such a processing takes an extremely long time, it is difficult for users to perform the processing on a routine basis.

The inventor (s) of the present invention has conducted studies on the security problem as described above to find out the following point. The point is related to an encryption technique which the inventor(s) has studied on a daily basis.

Encrypted data obtained by encrypting appropriate plaintext data (referred to as "data to be processed" throughout this specification) is completely nonsignificant unless the encrypted data is decrypted. In this regard, the encrypted data has a strong similarity to the "dust" data overwritten with the data "0" or "1" described above. Extending the idea, the encrypted data is turned into completely nonsignificant "dust" data as soon as the decryption of the encrypted data becomes impossible.

Further advancement of the above-described idea brought the inventor(s) of the present invention to the following. For encrypted data, in particular, encrypted data containing information necessary for decryption as a part thereof, the destruction of the part containing the information necessary for decryption makes the decryption of the encrypted data impossible. As a result, the encrypted data can be turned into "dust" data even without being deleted. Such a data destruction method (the "destruction" herein produces substantially the same effect as that of "deletion") takes a much shorter time than the overwriting of all the data with "0" or "1" data. Therefore, the data destruction method is suitable for the user's daily use.

The present invention is devised based on the above-described idea and provides a technique for preventing encrypted data generated by encrypting data to be processed from being decrypted to produce the same effect as that of the complete deletion of the data to be processed.

Disclosure of the Invention

In order to solve the above-describedproblem, the inventor (s) of the present invention proposes the following inventions. The inventions of this specification can be classified into a first to third inventions.

The first invention relates to a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions, the solution generating means storing an initial solution used for generating a first solution, for continuously generating the solutions; encryption means for encrypting the divisional plaintext data by using the solutions to convert the divisional plain text data into divisional encrypted data; and connection means for connecting the divisional encrypted data to obtain the encrypted data.

Further, the decryption processing apparatus includes: a decryption unit including: dividing means for dividing the encrypted data into a plurality of pieces of divisional encrypted data, each being composed of a predetermined number of bits; solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; destruction trigger input means for inputting destruction trigger information for starting a processing of preventing the encrypted data from being decrypted; and processing means for destructing a solution generated prior to the solutions used for decrypting the encrypted data in irreversible manner, when the destruction trigger information is input, the prior solution being necessary for generating the solutions used for decrypting the encrypted data.

The decryption processing apparatus, as described above, is used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions, the solution generating means storing an initial solution used for generating a first solution, for continuously generating the solutions; encryption means for encrypting the divisional plaintext data by using the solutions to convert the divisional plain text data into divisional encrypted data; and connection means for connecting the divisional encrypted data to obtain the encrypted data.

In the case that the decryption processing apparatus decrypts the encrypted data obtained by encrypting the data to be processed in the encryption processing apparatus, the same solution as that used in the encryption processing apparatus is indispensably required (the number of solutions required for decrypting the encrypted data is one in some cases and plural in other cases). In the invention, the solutions generated in the decryption processing apparatus (and also the solutions generated in the encryption processing apparatus) are continuously generated by using the previous solutions. Therefore, when the decryption processing apparatus is to decrypt a piece of encrypted data, the piece of encrypted data cannot be decrypted if an irreversible change is caused in the solution generated prior to the solution required for decrypting the piece of encrypted data, which must be used for generating the solution required for decrypting the piece of encrypted data. The decryption processing apparatus according to this invention causes the irreversible change in the solution as described above upon input of the destruction trigger information. The encrypted data which can no longer be decrypted can be referred to as "dust" data. The prevention of the decryption of the encrypted data in this manner produces the same effect as that of the complete deletion of the data to be processed.

Thenumber of the previous solutions, inwhich the irreversible change is caused in this invention, may be one or plural. Moreover, the previous solution, in which the irreversible change is caused, may be an initial solution.

The same effect as that of this invention can also be obtained by, for example, the following method.

There is provided a data processing method executed in a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions, the solution generating means storing an initial solution used for generating a first solution, for continuously generating the solutions; encryption means for encrypting the divisional plaintext data by using the solutions to convert the divisional plain text data into divisional encrypted data; and connection means for connecting the divisional encrypted data to obtain the encrypted data, the decryption processing apparatus including: a decryption unit including: dividing means for dividing the encrypted data into a plurality of pieces of divisional encrypted data, each being composed of a predetermined number of bits; solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; destruction trigger input means; and processing means.

The method includes the steps, executed by the processing means, of: receiving destruction trigger information for starting a processing of preventing the encrypted data from being decrypted from the destruction trigger input means; and causing an irreversible change in a solution generated prior to the solutions used for decrypting the encrypted data, the prior solution being necessary for generating the solutions used for decrypting the encrypted data, when the destruction trigger information is received.

The same effect as that of the above-described invention can also be obtained by, for example, the following computer program. By using the following computer program, the same effect as that of the above-described invention can be obtained even with a general computer.

There is provided a computer program for a computer as a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions, the solution generating means storing an initial solution used for generating a first solution, for continuously generating the solutions; encryption means for encrypting the divisional plaintext data by using the solutions to convert the divisional plain text data into divisional encrypted data; and connection means for connecting the divisional encrypted data to obtain the encrypted data, the decryption processing apparatus including: a decryption unit including: dividing means for dividing the encrypted data into a plurality of pieces of divisional encrypted data, each being composed of a predetermined number of bits; solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; destruction trigger input means; and the computer connected thereto.

The computer program causes the computer to execute the following steps of: receiving destruction trigger information for starting a processing of preventing the encrypted data from being decrypted from the destruction trigger input means; and causing an irreversible change in a solution generated prior to the solutions used for decrypting the encrypted data, the prior solution being necessary for generating the solutions used for decrypting the encrypted data, when the destruction trigger information is received.

As described above, the encrypted data used in the decryption processing apparatus according to the first invention uses the solution to encrypt the data to be processed for generating the encrypted data as well as to decrypt the encrypted data. In the above-described case, the solution is generated based on the previous solutions. However, the solution may be generated based not only on the previous solution but also on the solution and invariable environmental information contained in the encrypted data to be generated. With the solution as described above, when the decryption processing apparatus is to decrypt a piece of encrypted data, not only the irreversible change caused in the solution generated prior to the solution required for decrypting the piece of encrypted data, which must be used for generating the solution required for decrypting the piece of encrypted data, but also the irreversible change caused in the environmental information can prevent the piece of encrypted data from being decrypted. The encrypted data, which can no longer be decrypted in this manner, is turned into a sort of "dust" data as in the case described above. The prevention of the decryption of the encrypted data in this manner produces the same effect as that of the complete deletion of the data to be processed.

The environmental information in this specification is used for generating the solutions. In contrast to the solutions, the environmental information is not continuously generated (in other words, expressed as "invariable") and may be appropriate information contained in the encrypted data. The number of environmental information may be plural. In this specification, the environmental information can be, for example, a file name of the encrypted data containing the environmental information, information of creation date and time, information of update date and time, information of a file type or format, and the like. Specifically, information added to the encrypted data, in other words, information indicating some characteristic proper to the encrypted data can be used as the environmental information in the inventions of this specification.

When the environmental information is used to generate the solution, the first invention can be constituted as follows.

The first invention in this case is a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions and invariable environmental information to be contained in the encrypted data to be generated, the solution generating means storing an initial solution used for generating a first solution, for continuously generating the solutions; encryption means for encrypting the divisional plaintext data by using the solutions to convert the divisional plain text data into divisional encrypted data; and connection means for connecting the divisional encrypted data to obtain the encrypted data containing the environmental information.

Further, the decryption processing apparatus includes: a decryption unit including: dividing means for dividing the encrypted data into a plurality of pieces of divisional encrypted data, each being composed of a predetermined number of bits; solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; destruction trigger input means for inputting destruction trigger information for starting a processing of preventing the encrypted data from being decrypted; and processing means for destructing the environmental information contained in the encrypted data in irreversible manner, when the destruction trigger information is input.

The same effect as that of this invention can also be obtained by, for example, the following method.

There is provided a data processing method executed in a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions and invariable environmental information to be contained in the encrypted data to be generated, the solution generating means storing an initial solution used for generating a first solution, for continuously generating the solutions; encryption means for encrypting the divisional plaintext data by using the solutions to convert the divisional plain text data into divisional encrypted data; and connection means for connecting the divisional encrypted data to obtain the encrypted data containing the environmental information, the decryption processing apparatus including: a decryption unit including: dividing means for dividing the encrypted data into a plurality of pieces of divisional encrypteddata, eachbeing composed of a predetermined number of bits; solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; destruction trigger input means; and processing means.

The method includes the steps, executed by the processing means, of: receiving destruction trigger information for starting a processing of preventing the encrypted data from being decrypted from the destruction trigger input means ; and causing an irreversible change in the environmental information contained in the encrypted data when the destruction trigger information is received.

The same effect as that of the above-described invention can also be obtained by, for example, the following computer program. By using the following computer program, the same effect as that of the above-described invention can be obtained even with a general computer.

There is provided a computer program for a computer as a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions and invariable environmental information to be contained in the encrypted data to be generated, the solution generating means storing an initial solution used for generating a first solution, for continuously generating the solutions; encryption means for encrypting the divisional plaintext data by using the solutions to convert the divisional plain text data into divisional encrypted data; and connection means for connecting the divisional encrypted data to obtain the encrypted data containing the environmental information, the decryption processing apparatus including: a decryption unit including: dividing means for dividing the encrypted data into a plurality of pieces of divisional encrypted data, each being composed of a predetermined number of bits; solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; destruction trigger input means; and the computer connected thereto.

The computer program causes the computer to execute the following steps of: receiving destruction trigger information for starting a processing of preventing the encrypted data from being decrypted from the destruction trigger input means; and causing an irreversible change in the environmental information contained in the encrypted data when the destruction trigger information is received.

The second invention is a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the timing specifying information.

Further, the decryption processing apparatus includes: a decryption unit including: dividing means for dividing the encrypted data into a plurality of pieces of divisional encrypted data, each being composed of a predetermined number of bits; solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; timing specifying information reading means for reading the timing specifying information from the encrypted data; and processing means for destructing a solution generated prior to the solutions used for decrypting the encrypted data, the prior solution being necessary for generating the solutions used for decrypting the encrypted data, in irreversible manner, and the processing means monitors whether or not the timing specified by the timing specifying information read by the timing specifying information reading means has come , and processing means destructs the solution if the timing has come.

The encrypted data used in the decryptionprocessing apparatus is approximately the same as that in the first invention, but further contains the timing specifying information for specifying timing to prevent the encrypted data from being decrypted. As in the first invention, the decryption processing apparatus causes the irreversible change in the previous solution, which is required to generate the solution necessary for decrypting the encrypted data, to turn the encrypted data into a sort of "dust" data. The timing to turn the encrypted data into the "dust" data is controlled by the timing specifying information. The decryption processing apparatus, for example, cons tantlymoni tors whether or not the timing to prevent the encrypted data frombeing decrypted, which is specified by the timing specifying information, has come and causes the irreversible change in the previous solution required to generate the solution necessary for decrypting the encrypted data as in the first invention, immediately after the timing or after elapse of a predetermined time after the timing, if the timing has come. As described in the related art, there is always the risk of data leakage even if the data is encrypted. The automatic execution of the above-described processing of turning the encrypted data into a sort of "dust" data by the decryption processing apparatus is significant in view of the prevention of leakage of the data to be processed.

The same effect as that of this invention can also be obtained by, for example, the following method.

There is provided a data processing method executed in a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the timing specifying information, the decryption processing apparatus including: a decryption unit including: dividing means for dividing the encrypted data into a plurality of pieces of divisional encrypted data, each being composed of a predetermined number of bits; solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; and processing means.

The method includes the steps, executed by the processing means, of: reading the timing specifying information from the encrypted data; and monitoring whether or not the timing specified by the timing specifying information read in the step of reading the timing specifying information has come and causing an irreversible change in a solution generated prior to the solutions used for decrypting the encrypted data, the prior solution being necessary for generating the solutions used for decrypting the encrypted data, if the timing has come.

The same effect as that of the above-described invention can also be obtained by, for example, the following computer program. By using the following computer program, the same effect as that of the above-described invention can be obtained even with a general computer.

There is provided a computer program for a computer as a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the timing specifying information, the decryption processing apparatus including: a decryption unit including: dividing means for dividing the encrypted data into a plurality of pieces of divisional encrypted data, each being composed of a predetermined number of bits; solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; and the computer connected thereto.

The computer program causes the computer to execute the following steps of: reading the timing specifying information from the encrypted data; and monitoring whether or not the timing specified by the timing specifying information read in the step of reading the timing specifying information has come and causing an irreversible change in a solution generated prior to the solutions used for decrypting the encrypted data, the prior solution being necessary for generating the solutions used for decrypting the encrypted data, if the timing has come.

Even in the second invention, the environmental information is sometimes used to generate the solution as in the first invention. In this case, the second invention can be constituted as follows.

The second invention in this case is a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions and invariable environmental information to be contained in the encrypted data to be generated, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the environmental information and the timing specifying information.

Further, the decryption processing apparatus includes: a decryption unit including: dividing means for dividing the encrypted data into a plurality of pieces of divisional encrypted data, each being composed of a predetermined number of bits; solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; timing specifying information reading means for reading the timing specifying information from the encrypted data; and processing means for destructing the environmental information contained in the encrypted data in irreversible manner, and the processing means monitors whether or not the timing specified by the timing specifying information read by the timing specifying information reading means has come, and the processing means destructs the solution if the timing has come.

Even with this decryption processing apparatus, the encrypted data can be prevented from being decrypted. The encrypted data which can no longer be decrypted can be referred to as "dust" data. The prevention of the decryption of the encrypted data in this manner produces the same effect as that of the complete deletion of the data to be processed.

The same effect as that of this invention can also be obtained by, for example, the following method.

There is provided a data processing method executed in a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions and invariable environmental information to be contained in the encrypted data to be generated, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the environmental information and the timing specifying information, the decryption processing apparatus including: a decryption unit including: dividing means for dividing the encrypted data into a plurality of pieces of divisional encrypteddata, eachbeing composed of a predetermined number of bits; solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; and processing means.

The method includes the steps, executed by the processing means, of: reading the timing specifying information from the encrypted data; and monitoring whether or not the timing specified by the timing specifying information read in the step of reading the timing specifying information has come and causing an irreversible change in the environmental information contained in the encrypted data if the timing has come.

The same effect as that of the above-described invention can also be obtained by, for example, the following computer program. By using the following computer program, the same effect as that of the above-described invention can be obtained even with a general computer.

There is provided a computer program for a computer as a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions and invariable environmental information to be contained in the encrypted data to be generated, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the environmental information and the timing specifying information, the decryption processing apparatus including: a decryption unit including: dividing means for dividing the encrypted data into a plurality of pieces of divisional encrypted data, each being composed of a predetermined number of bits; solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; and the computer connected thereto.

The computer program causes the computer to execute the following steps of: reading the timing specifying information from the encrypted data; and monitoring whether or not the timing specified by the timing specifying information read in the step of reading the timing specifying information has come and causing an irreversible change in the environmental information contained in the encrypted data if the timing has come.

The third invention is a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the timing specifying information.

Further, the decryption processing apparatus includes: a decryption unit including: dividing means for dividing the encrypted data into a plurality of pieces of divisional encrypted data, each beingcomposedofapredeterminednumberofbits; solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; decryption trigger input means for inputting decryption trigger information for starting decryption of the encrypted data; timing specifying information reading means for reading the timing specifying information from the encrypted data when the decryption trigger information is input from the decryption trigger input means; and processing means for receiving the timing specifying information read by the timing specifying information reading means when the decryption trigger information is input to monitor whether or not the timing specified by the timing specifying information has come and allowing the decryption unit to decrypt the encrypted data if the timing has not come yet while causing an irreversible change in a solution generated prior to the solutions used for decrypting the encrypted data, the prior solution being necessary for generating the solutions used for decrypting the encrypted data, if the timing has come.

The encrypted data used in the third invention is the same as that in the second invention and contains the timing specifying information for specifying the timing to prevent the encrypted data from being decrypted. The decryption processing apparatus according to the third invention controls the timing to cause the irreversible change in the solution generated prior to the solution required to decrypt the encrypted data, which is necessary for generating the solution required to decrypt the encrypted data by the timing specifying information as in the second invention. When the decryption trigger information for prompting the decryption of the encrypted data is input, the decryption processing apparatus in the third invention receives the timing specifying information read by the timing specifying information reading means to determine whether or not the timing specified by the timing specifying information has come and allows the decryption unit to decrypt the encrypted data if the timing has not come yet while causing the irreversible change in the solution generated prior to the solution required to decrypt the encrypted data, which is necessary for generating the solution required to decrypt the encrypted data, if the timing has come. As described above, the decryption processing apparatus in the third invention decrypts the encrypted data which is intended to be decrypted by the user or turns the encrypted data into a sort of "dust" data when the user performs a decryption operation. This invention is also effective in preventing the data to be processed from being leaked due to the leakage of the encrypted data.

The same effect as that of this invention can also be obtained by, for example, the following method.

There is provided a data processing method executed in a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the timing specifying information, the decryption processing apparatus including: a decryption unit including: dividing means for dividing the encrypted data into a plurality of pieces of divisional encrypted data, each being composed of a predetermined number of bits; solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; decryption trigger input means; and processing means.

The method includes the steps, executed by the processing means, of: receiving decryption trigger information for starting decryption of the encrypted data from the decryption trigger input means; reading the timing specifying information from the encrypted data when the decryption trigger information is input from the decryption trigger input means; and receiving the timing specifying information read in the step of reading the timing specifying information when the decryption trigger information is input to determine whether or not the timing specified by the timing specifying information has come and allowing the decryption unit to decrypt the encrypted data if the timing has not come yet while causing an irreversible change in a solution generated prior to the solutions used for decrypting the encrypted data, the prior solution being necessary for generating the solutions used for decrypted the encrypted data, if the timing has come.

The same effect as that of the above-described invention can also be obtained by, for example, the following computer program. By using the following computer program, the same effect as that of the above-described invention can be obtained even with a general computer.

There is provided a computer program for a computer as a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the timing specifying information, the decryption processing apparatus including: a decryption unit including: dividing means for dividing the encrypted data into a plurality of pieces of divisional encrypted data, each being composed of a predetermined number of bits; solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; decryption trigger input means; and the computer connected thereto.

The computer program causes the computer to execute the following steps of: receiving decryption trigger information for starting decryption of the encrypted data from the decryption trigger input means; reading the timing specifying information from the encrypted data when the decryption trigger information is input from the decryption trigger input means; and receiving the timing specifying information read in the step of reading the timing specifying information when the decryption trigger information is input to determine whether or not the timing specified by the timing specifying information has come and allowing the decryption unit to decrypt the encrypted data if the timing has not come yet while causing an irreversible change in a solution generated prior to the solutions used for decrypting the encrypted data, the prior solution being necessary for generating the solutions used for decrypting the encrypted data, if the timing has come.

Even in the third invention, the environmental information is sometimes used to generate the solution as in the first invention and the second invention. In this case, the third invention can be constituted as follows.

The third invention in this case is a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions and invariable environmental information to be contained in the encrypted data to be generated, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the environmental information and the timing specifying information.

Further, the decryption processing apparatus includes: a decryption unit including: dividing means for dividing the encrypted data into a plurality of pieces of divisional encrypted data, each being composed of a predetermined number of bits; solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; decryption trigger input means for inputting decryption trigger information for starting decryption of the encrypted data; timing specifying information reading means for reading the timing specifying information from the encrypted data when the decryption trigger information is input from the decryption trigger input means; and processing-means for receiving the timing specifying information read by the timing specifying information reading means when the decryption trigger information is input to determine whether or not the timing specified by the timing specifying information has come and allowing the decryption unit to decrypt the encrypted data if the timing has not come yet while causing an irreversible change in the environmental information contained in the encrypted data if the timing has come.

Specifically, even with this decryption processing apparatus, the encrypted data can be prevented from being decrypted. The encrypted data which can no longer be decrypted can be referred to as "dust" data. The prevention of the decryption of the encrypted data in this manner produces the same effect as that of the complete deletion of the data to be processed.

The same effect as that of this invention can also be obtained by, for example, the following method.

There is provided a data processing method executed in a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions and invariable environmental information to be contained in the encrypted data to be generated, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the environmental information and the timing specifying information, the decryption processing apparatus including: a decryption unit including: dividing means for dividing the encrypted data into a plurality of pieces of divisional encrypteddata, each being composed of a predetermined number of bits; solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; decryption trigger input means; and processing means.

The method includes the steps, executed by the processing means, of: receiving decryption trigger information for starting decryption of the encrypted data from the decryption trigger input means; reading the timing specifying information from the encrypted data when the decryption trigger information is input from the decryption trigger input means; and receiving the timing specifying information read in the step of reading the timing specifying information when the decryption trigger information is input to determine whether or not the timing specified by the timing specifying information has come and allowing the decryption unit to decrypt the encrypted data if the timing has not come yet while causing an irreversible change in the environmental information contained in the encrypted data if the timing has come.

The same effect as that of the above-described invention can also be obtained by, for example, the following computer program. By using the following computer program, the same effect as that of the above-described invention can be obtained even with a general computer.

There is provided a computer program for a computer as a decryption processing apparatus used in combination with an encryption processing apparatus for encrypting plaintext data to be processed to obtain encrypted data, the encryption processing apparatus including: dividing means for dividing the data to be processed into a plurality of pieces of divisional plaintext data, each being composed of a predetermined number of bits; solution generating means for continuously generating solutions, each being uniquely determined based on previous solutions and invariable environmental information to be contained in the encrypted data to be generated, the solution generating means storing an initial solution used for generating a first solution, for continuously generating the solutions; encryption means for encrypting the divisional plaintext data by using the solutions to convert the divisional plain text data into divisional encrypted data; timing specifying information generating means for generating timing specifying information for specifying timing to prevent the encrypted data containing the timing specifying information from being decrypted; and connection means for connecting the divisional encrypted data to obtain the encrypted data containing the environmental information and the timing specifying information, the decryption processing apparatus including: a decryption unit including: dividing means for dividing the encrypted data into a plurality of pieces of divisional encrypted data, each being composed of a predetermined number of bits; solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions; decryption means for decrypting the divisional encrypted data by using the solutions to convert the divisional encrypted data into divisional plain text data; and connection means for connecting the divisional plaintext data to obtain the data to be processed; decryption trigger input means; and the computer connected thereto.

The computer program causes the computer to execute the following steps of: receiving decryption trigger information for starting decryption of the encrypted data from the decryption trigger input means; reading the timing specifying information from the encrypted data when the decryption trigger information is input from the decryption trigger input means; and receiving the timing specifying information read in the step of reading the timing specifying information when the decryption trigger information is input to determine whether or not the timing specified by the timing specifying information has come and allowing the decryption unit to decrypt the encrypted data if the timing has not come yet while causing an irreversible change in the environmental information contained in the encrypted data if the timing has come.

The following is common to the first to third inventions.

The processing means in the inventions of this specification causes the irreversible change in the solution generated prior to the solution used for decrypting the encrypted data, which is necessary to generate the solution used for decrypting the encrypted data, or in the environmental information. The way to cause the irreversible change in the solution or the environmental information, in which the irreversible change is to be caused, can be appropriately determined. For example, the solution or the environmental information, in which the irreversible change is to be caused, is overwritten with appropriate data or irreversibly converted to cause the irreversible change in the solution or the environmental information. The appropriate data to be written over the solution or the environmental information is, for example, data irrelevant to the encrypted data. For the irreversible conversion, for example, after a processing of truncating the decimal numbers or the first digits of the result of an appropriate calculation is performed on a data string of the solution or the environmental information to be irreversibly converted, the data string of the original solution or environmental information may be replaced by the result of calculation thus processed. Alternatively, the solution or the environmental information may be subjected to a JPEG conversion.

The solution generating means in the encryption processing apparatus may generate the solution at any timing. For example, the solution generating means in the encryption processing apparatus may generate the solution each time the encryption means encrypts the divisional plaintext data. The solution generating means in the decryption processing apparatus may generate the solution at any timing, and the solution generating means in the decryption processing apparatus can generate the solution each time the decryption means decrypts the divisional encrypted data if the solution generating means in the encryption processing apparatus generates the solution each time the encryption means encrypts the divisional plaintext data. In this manner, if a plurality of solutions is used for encrypting a piece of data to be processed to generate a piece of encrypted data or for decrypting a piece of encrypted data to generate a piece of data to be processed, the confidentiality of the encryption of the encrypted data is enhanced. Moreover, the possibility of decrypting the encrypted data, which can no longer be decrypted, gets further closer to zero.

The encryption means of the encryption processing apparatus in the inventions of this specification may use a predetermined key and a predetermined algorithm to encrypt the divisional plaintext data. In addition, the encryption processing apparatus may include means of generating at least one of the key and the algorithm used for the encryption based on the solution. Moreover, the decryption means of the decryption processing apparatus in the inventions of this specification may use predetermined key and algorithm to decrypt the divisional encrypted data. In addition, the decryption processing apparatus may include means of generating at least one of the key and the algorithm used for the decryption based on the solution. When the encryption processing apparatus includes the means of generating at least one of the key and the algorithm used for the encryption based on the solution, the decryption processing apparatus includes the means of generating at least one of the key and the algorithm used for the decryption based on the solution. If a plurality of keys or algorithms is used for encrypting a piece of data to be processed to generate a piece of encrypted data or for decrypting a piece of encrypted data to generate a piece of data to be processed, and further, the solutions are used for generating the keys or the algorithms, the confidentiality of the encryption of the encrypted data is enhanced.

Brief Description of the Drawings

Fig. 1 is a view illustrating the entire configuration of an encryption system according to a first embodiment.
Fig. 2 is a hardware configuration of an encryption processing apparatus included in the encryption system illustrated in Fig. 1.
Fig. 3 is a block diagram illustrating a configuration of an encryption device included in the encryption processing apparatus illustrated in Fig. 2.
Figs. 4 are diagrams illustrating data structures of encrypted data generated in the encryption processing apparatus illustrated in Fig. 2.
Fig. 5 is a diagram illustrating a hardware configuration of a decryption processing apparatus included in the encryption system illustrated in Fig. 1.
Fig. 6 is a block diagram illustrating a configuration of a decryption device included in the decryption processing apparatus illustrated in Fig. 5.
Fig. 7 is a functional block diagram illustrating functional blocks generated in the decryption processing apparatus illustrated in Fig. 1.
Fig. 8 is a flowchart illustrating a flow of an encryption processing executed in the encryption system illustrated in Fig. 1.
Fig. 9 is a flowchart illustrating a flow of a decryption processing executed in the encryption system illustrated in Fig. 1.

Best Mode for Carrying Out the Invention

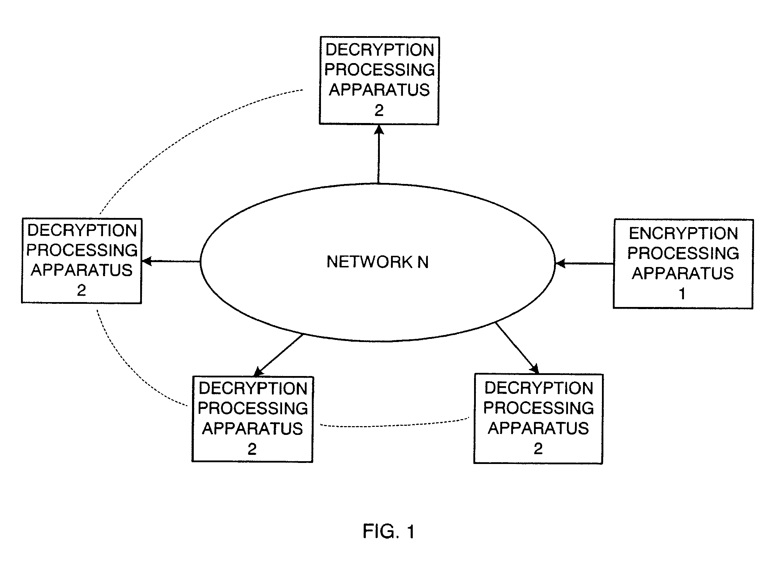

Hereinafter, a preferred embodiment of the present invention will be described.
In this embodiment, an encryption system including an encryption processing apparatus 1 and a plurality of decryption processing apparatuses 2 as illustrated in Fig. 1 is described as an embodiment of the present invention. The decryption processing apparatus 2 corresponds to a decryption processing apparatus of the present invention.

The encryption processing apparatus 1 and the decryption processing apparatuses 2 are connected to each other through a network N such as a local area network (LAN) or the like to enable the transmission of encrypted data generated by the encryption processing apparatus 1 in the manner described below to each of the decryption processing apparatuses 2.

It is certain that the encryption processing apparatus 1 and the decryption processing apparatuses 2 are not necessarily connected to each other through the network N. When the encryption processing apparatus 1 and the decryption processing apparatuses 2 are not connected to each other, however, each of the decryption processing apparatuses 2 is required to be able to receive the encrypted data generated by the encryption processing apparatus 1 through, for example, a recording medium such as a CD-ROM, from the encryption processing apparatus 1. The description of a data writer for recording the encrypted data on the recording medium or a data reader for reading the encrypted data from the recording medium, which are required for the reception of the encrypted data, is omitted because they are generally employed techniques.

At least one decryption processing apparatus 2 is sufficient. In some cases, the encryption processing apparatus 1 also serves as the decryption processing apparatus 2.

The configurations of the encryption processing apparatus 1 and the decryptionprocessing apparatus 2 will be described. First, the configuration of the encryption processing apparatus 1 will be described.

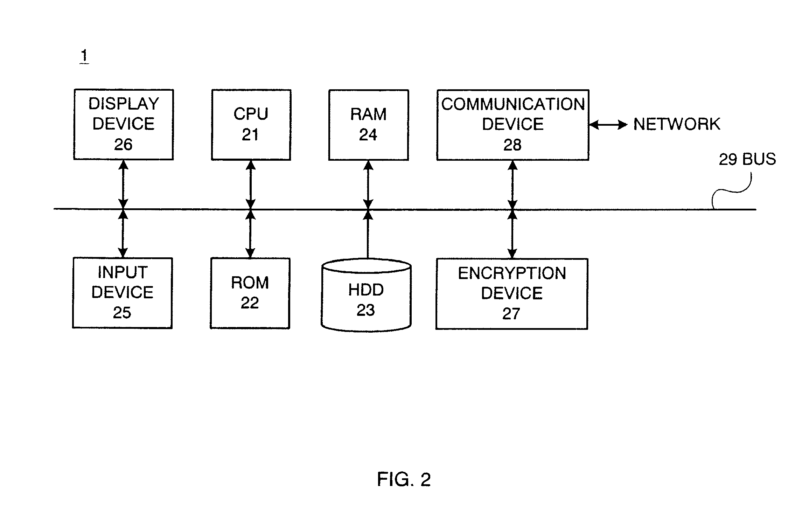

Fig. 2 illustrates a hardware configuration of the encryption processing apparatus 1.

In this embodiment, the encryption processing apparatus 1 includes a central processing unit (CPU) 21, a read only memory (ROM) 22, a hard disk drive (HDD) 23, a random access memory (RAM) 24, an input device 25, a display device 26, an encryption device 27, a communication device 28, and a bus 29. The CPU 21, the ROM 22, the HDD 23, the RAM 24, the input device 25, the display device 26, the encryption device 27, and the communication device 28 can exchange data through the bus 29.

A predetermined program and predetermined data (containing data to be processed in some cases including this embodiment, and also containing data necessary for executing the program) are recorded on the ROM 22 or the HDD 23. The CPU 21 controls the entire encryption processing apparatus 1 and executes a processing described below based on the program or the data recorded in the ROM 22 or the HDD 23. The RAM 24 is used as a working storage area for performing the processing in the CPU 21.

The input device 25 includes a keyboard, a mouse, or the like, and is used for command or data entry. The display device 26 includes a liquid crystal display (LCD), a cathode ray tube (CRT), or the like and is used for displaying the command, the input data, or a state of the processing described below.

The encryption device 27 encrypts the data to be processed, as described below.

The communication device 28 executes the communication with the decryption processing apparatuses 2 through the network N. The communication device 28 transmits the encrypted data to a destination designated by a MAC address or the like contained in a header of the encrypted data described below.

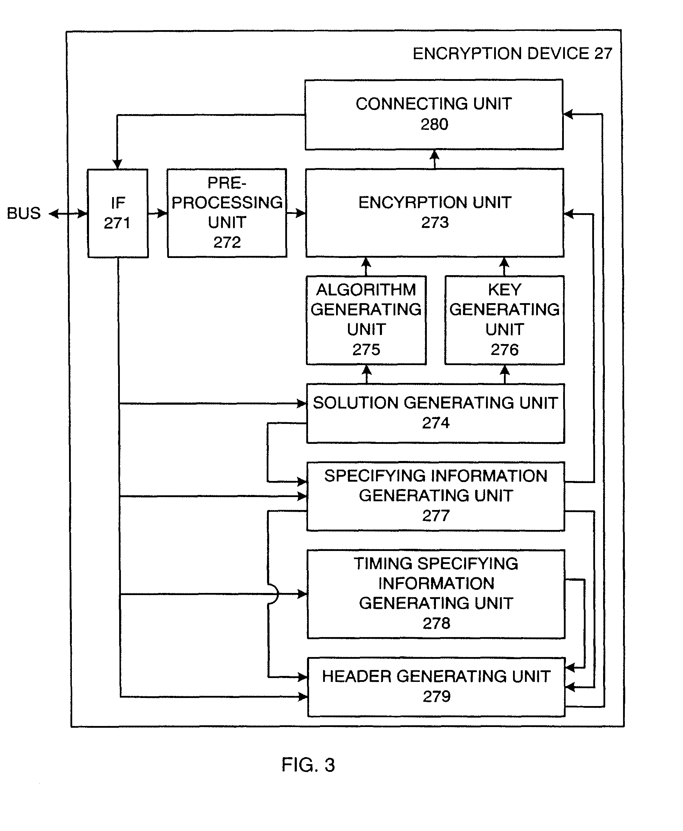

Next, the configuration of the encryption device 27 will be described. Fig. 3 is ablock configuration diagram of the encryption device 27.

The encryption device 27 includes an interface unit 271, a pre-processing unit 272, an encryption unit 273, a solution generating unit 274, an algorithm generating unit 275, a key generating unit 276, a specifying information generating unit 277, a timing specifying information generating unit 278, a header generating unit 279, and a connecting unit 280.

The interface unit 271 receives and transmits data between the bus 29 and the communication device 28.

The interface unit 271 receives the data to be processed from the HDD 23 through the bus 29 and transmits the received data to be processed to the pre-processing unit 272. Upon reception of the data to be processed, the interface unit 271 transmits data indicating the reception of the data to be processed to the solution generating unit 274. The interface unit 271 also receives an input from the input device 25 to transmit the received input to the timing specifying information generating unit 278.

On the other hand, the interface unit 271 receives the encrypted data from the connecting unit 280 as described below to transmit the received encrypted data to the bus 29. The encrypted data is transmitted to the decryption processing apparatus 2 via the network N through the communication device 28.

The pre-processing unit 272 has a function of dividing the data to be processed, which is received from the bus 29 through the interface unit 271, into divisional plaintext data, each being composed of a predetermined number of bits, and then transmitting the obtained divisional plaintext data to the encryption unit 273. How to divide the data to be processed will be described below. The encryption unit 273 encrypts the divisional plaintext data in the order of the positions closer to the head in the data to be processed into divisional encrypted data. The first generated divisional encrypted data corresponds to first divisional encrypted data.

The encryption unit 273 has a function of receiving the divisional plaintext data from the pre-processing unit 272 and encrypting the received divisional plaintext data. The encryption unit 273 has another function of receiving specifying information described below from the specifying information generating unit 277 to mix the specifying information into the divisional plaintext data prior to the encryption.

The details of an encryption processing will be described below.

The solution generating unit 274 sequentially generates solutions. The solutions generated by the solution generating unit 274 of the encryption processing apparatus 1, which are generated in the same order, become the same. A decryption device in the decryption processing apparatus 2 described below also includes a solution generating unit, which is the same as the solution generating unit 274 included in the encryption processing apparatus 1. Specifically, by the comparison between the solutions generated in the same order, the solution generated by the solution generating unit 274 included in the encryption processing apparatus 1 and that generated by the solution generating unit included in the decryption processing apparatus 2 become identical with each other. The solution in this embodiment is a pseudorandom number. The generated solution is transmitted to the algorithm generating unit 275, the key generating unit 276, and the specifying information generating unit 277.

The algorithm generating unit 275 generates an algorithm based on the solution received from the solution generating unit 274. The algorithm is used for performing the encryption processing in the encryption unit 273.

The key generating unit 276 generates a key based on the solution received from the solution generating unit 274. The key is used for performing the encryption processing in the encryption unit 273.

The specifying information generating unit 277 generates specifying information based on the data received from, for example, the input device 25 operated by a user, through the interface unit 271.

The specifying information generating unit 277 generates the specifying information as information indicating the order of generation of the solution transmitted from the solution generating unit 274. The specifying information generated by the specifying information generating unit 277 is used for decrypting each of the above-described divisional encrypted data in the decryption processing apparatus 2. The specifying information specifies a solution used for decrypting each of the divisional encrypted data.

The specifying information in this embodiment is plural. Each piece of the specifying information is associated with one divisional encrypted data and indirectly specifies a key used for decrypting the divisional encrypted data associated therewith.

The specifying information generating unit 277 transmits the specifying information to the encryption unit 273. Fundamentally, in this embodiment, the specifying information indicates the order of generation of the solution in the encryption processing apparatus 1. The specifying information generating unit 277 transmits the specifying information used for decrypting the divisional encrypted data which is the first to be decrypted (hereinafter, referred to as "first specifying information" in some cases; in this embodiment, information indicating the order of generation of the first generated solution for the encryption of the encrypted data in the encryption processing apparatus 1 corresponds to the first specifying information) not to the encryption unit 273 but exceptionally to the header generating unit 279.

The timing specifying information generating unit 278 generates timing specifying information based on the data received through the interface unit 271, for example, from the input device 25 operated by the user.

The timing specifying information generated by the timing specifying information generating unit 278 specifies timing to prevent the encrypted data containing the timing specifying information from being decrypted. For the timing specifying information, a simple designation of a date and a time, for example, such as X (month), X (day), 200X (year), or X (hour), X (minute), X (month), X (day), 200X (year) is sufficient. The timing specifying information may contain the content for the allowance or inhibition of decryption, such as the inhibition of decryption of the encrypted data containing the timing specifying information after predetermined date and time or the allowance of decryption of the encrypted data containing the timing specifying information before the predetermined date and time.

The timing specifying information generating unit 278 transmits the generated timing specifying information to the header generating unit 279.

The header generating unit 279 generates header data serving as a header of the encrypted data based on the data received through the interface unit 271, for example, from the input device 25 operated by the user.

The header data contains an address of the encryption processing apparatus 1 corresponding to a transmission source of the encrypteddata, an address of the decryptionprocessing apparatus 2 corresponding to a destination of the encrypted data, environmental information of the encrypted data containing the header, and the like. The header data generating unit 279 allows the header data to contain both the first specifying information received from the specifying information generating unit 277 and the timing specifying information received from the timing specifying information generating unit 278.

The above-described environmental information is predetermined invariable information, in other words, predetermined information which does not vary in the header data. The environmental information is automatically generated based on information input from the input device 25 by the user or by the function of an OS or other programs installed on the encryption device 1. The environmental information can be, for example, a file name of the encrypted data containing the environmental information, information of creation date and time, information of update date and time (for example, the last update date and time), information of a file type or format, and the like. In this embodiment, a file name of the encrypted data is used as the environmental information.

The header generating unit 279 transmits the generated header data to the connecting unit 280.

The connecting unit 280 has a function of connecting the divisional encrypted data generated by encrypting the divisional plaintext data in the encryption unit 273 to obtain a unit of encrypted data. The connecting unit 280 in this embodiment connects the header data generated by the header generating unit 279 in addition to the divisional encrypted data received from the encryption unit 273 to obtain a unit of the encrypted data.

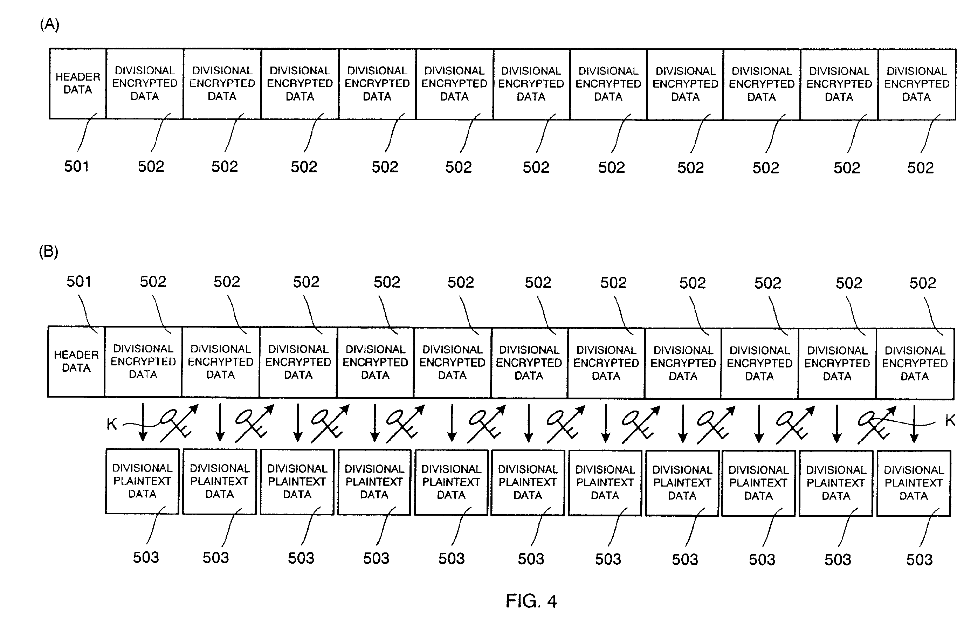

A data structure of the encrypted data is as exemplified in Fig. 4(A). The actual number of the divisional encrypted data 502 is much larger than illustrated, but the number of the illustrated divisional encrypted data 502 is quite small in Figs. 4(A) and 4(B) for the convenience of illustration.

The encrypted data contains the above-described header data 501 at its head (a left end in Figs. 4(A) and 4 (B) corresponds to the head of the encrypted data), as illustrated in Fig. 4(A). The multiple pieces of divisional encrypted data 502 follow the header data 501. The divisional encrypted data 502, which is decrypted earlier in the decryption of the encrypted data, is situated closer to the head in the encrypted data. In other words, for decryption of the encrypted data, the divisional encrypted data 502 are decrypted in the order of arrangement of the divisional encrypted data 502 from the first divisional encrypted data 502 to the last divisional encrypted data 502.

The encrypted data generated in the connecting unit 280 is transmitted to the interface unit 271 and then to the communication device 28 through the bus 29 and is further transmitted to the decryption processing apparatus 2 through the network N.

Next, the configuration of the decryption processing apparatus 2 will be described.

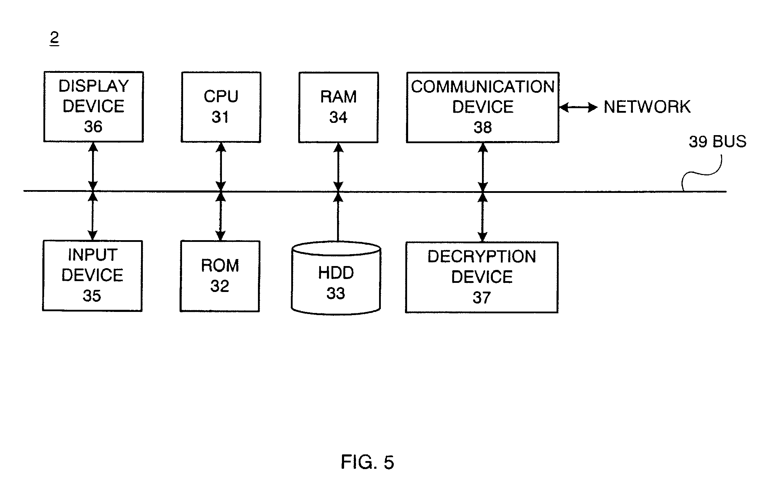

A hardware configuration of the decryption processing apparatus 2 is as illustrated in Fig. 5.

The decryption processing apparatus 2 includes a CPU 31, a ROM 32, an HDD 33, a RAM 34, an input device 35, a display device 36, a decryption device 37, a communication device 38, and a bus 39. The CPU 31, the ROM 32, the HDD 33, the RAM 34, the input device 35, the display device 36, and the bus 39 in the decryption processing apparatus 2 are respectively configured to be the same as the CPU 21, the ROM 22, the HDD 23, the RAM 24, the input device 25, the display device 26 and the bus 29 in the encryption processing apparatus 1 to have the same functions. The HDD 33 in the decryption processing apparatus 2 stores a MAC address of the decryption processing apparatus 2.

Note that the communication device 38 in the decryption processing apparatus 2 can receive the encrypted data transmitted from the encryption processing apparatus 1 through the network N.

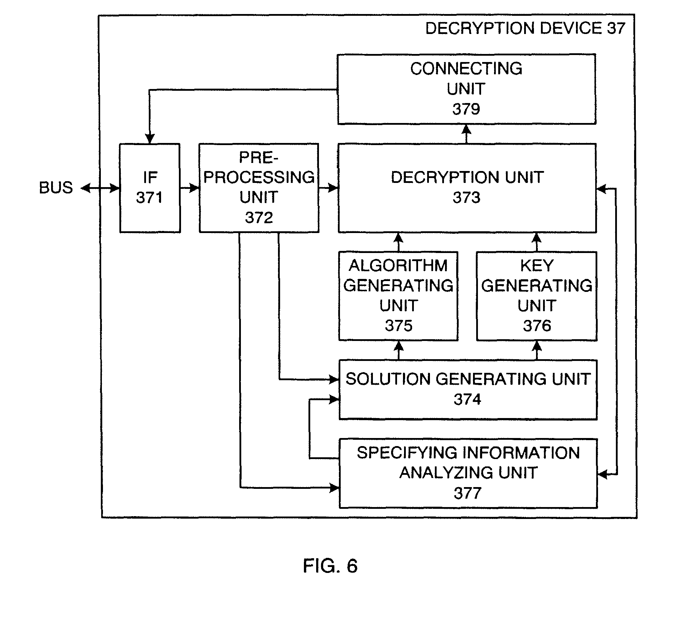

The decryption device 37 decrypts the encrypted data received from the encryption processing apparatus 1 and is configured as illustrated in Fig. 6.

The decryption device 37 includes an interface unit 371, a pre-processing unit 372, a decryption unit 373, a solution generating unit 374, an algorithm generating unit 375, a key generating unit 376, a specifying information analyzing unit 377, and a connecting unit 379.

The interface unit 371 receives the encrypted data from the communication device 38 through the bus 39 and transmits the received encrypted data to the pre-processing unit 372.

On the other hand, the interface unit 371 receives the data to be processed from the connecting unit 379 as described below to transmit the received data to be processed to the bus 39.

When receiving the encrypted data from the bus 39 through the interface unit 371, the pre-processing unit 372 performs the following processing.

The pre-processing unit 372, which has received the encrypted data, first extracts the header data from the received encrypted data and also extracts the first specifying information contained in the header data therefrom to transmit the first specifying information to the specifying information analyzing unit 377.

The pre-processing unit 372 also performs a processing of dividing the encrypted data to obtain the divisional encrypted data. The division is made possible, for example, by the agreement between the encryption processing apparatus 1 and the plurality of decryption processing apparatuses 2 on a length (size) of the divisional encrypted data or by writing a method of dividing the encrypted data to obtain the divisional encrypted data in the header data contained in the encrypted data to thereby divide the encrypted data according to the written information in the pre-processing unit 372. Note that the encrypted data is sequentially divided from the head side to obtain the divisional encrypted data.

The pre-processing unit 372 transmits the divisional encrypted data obtained by dividing the encrypted data to the decryption unit 373.

The decryption unit 373 has a function of decrypting the divisional encrypted data received from the pre-processing unit 372. The details of the decryption will be described below.

Note that every divisional encrypted data except for the last one contains the specifying information (more precisely, the specifying information is contained in an encrypted form for each divisional plaintext data). The decryption unit 373 has another function of transmitting the specifying information contained in the decrypted data obtained by decrypting the divisional encrypted data to the specifying information analyzing unit 377.

The specifying information analyzing unit 377 analyzes the content indicated by the specifying information (the first specifying information received from the pre-processing unit 372 or the other specifying information received from the decryption unit 373). The specifying information analyzing unit 377 transmits information on the content specified by the specifying information to the solution generating unit 374. Since the specifying information indicates the order of generation of the solution in the encryption processing apparatus 1 in this embodiment, the specifying information analyzing unit 377 transmits the specifying information to the solution generating unit 374.

The solution generating unit 374 sequentially generates the solutions. The solution generated by the solution generating unit 374 is the same as that generated by the solution generating unit 274 in the encryption processing apparatus 1 in the same order. The order of the solution to be generated by the solution generating unit 374 is specified by the information transmitted from the specifying information analyzing unit 377. The generated solution is transmitted to the algorithm generating unit 375 and the key generating unit 376.

The algorithm generating unit 375 generates the algorithm based on the solution received from the solution generating unit 374. The algorithm is used for performing the decryption processing in the decryption unit 373. The algorithm generated by the algorithm generating unit 375 in the decryption processing apparatus 2 is the same as that generated by the algorithm generating unit 275 in the encryption processing apparatus 1 in the same order.

The key generating unit 376 generates the key based on the solution received from the solution generating unit 374. The key is used for performing the decryption processing in the decryption unit 373. The key generated by the key generating unit 376 in the decryption processing apparatus 2 is the same as that generated by the key generating unit 276 in the encryption processing apparatus 1 in the same order.

The function of the connecting unit 379 in the decryption processing apparatus 2 is approximately the same as that of the encryption processing apparatus 1. The connecting unit 379 gathers the divisional plaintext data generated by the decryption of multiple pieces of the divisional encrypted data in the decryption unit 373 into a unit to generate the data to be processed. The data to be processed is the same as the original data to be processed, which has been encrypted in the encryption processing apparatus 1. The data to be processed is transmitted through the bus 39 to the exterior of the decryption device 37 (for example, to the HDD 33).

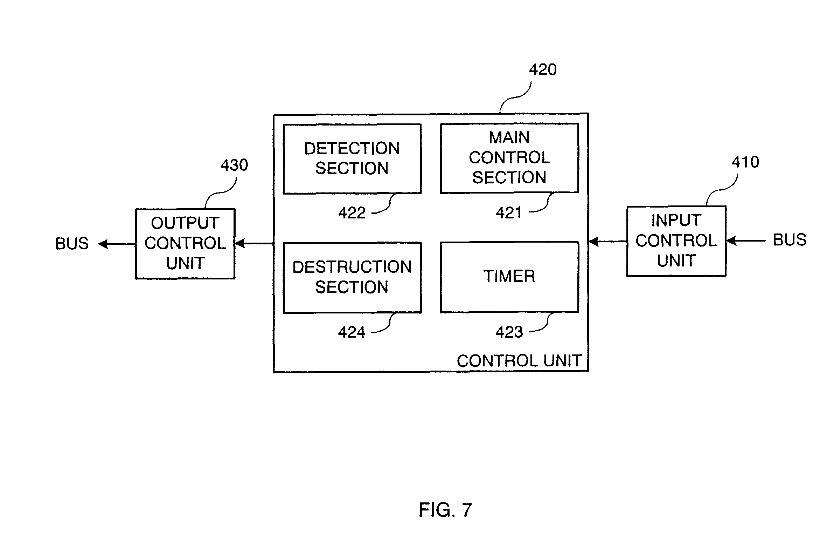

In the decryption processing apparatus 2, the CPU 31 executes the program recorded in the ROM 32 or the HDD 33 to form functional blocks as illustrated in Fig. 7. The functional blocks illustrated in Fig. 7 may be formed only by the above-described program recorded in the ROM 32 or the HDD 33, but may also be formed by the cooperation between the above-described program and another program which is, for example, an OS included in the decryption processing apparatus 2. Moreover, a part of the decryption device 37 described above may be formed by the above-described program.

The functional blocks in the decryption processing apparatus 2, which are formed by the CPU 31, include an input control unit 410, a control unit 420, and an output control unit 430, as illustrated in Fig. 7.

The input control unit 410 has a function of receiving an input from the input device 35 through the bus 39 and analyzing the content of the input to transmit the analyzed content to the control unit 420. The content of the input from the input device 35, which is received by the input control unit 410, will be described blow. The input control unit 410 has another function of receiving the encrypted data through the bus 39 from, for example, the HDD 33 to transmit the received encrypted data to the control unit 420.

The control unit 420 has a main function of turning the encrypted data into "dust" data according to the present invention. The control unit 420 has another function of determining whether or not to turn the encrypted data into "dust" according to the present invention although the control unit 420 does not always perform such a determination for all the encrypted data.

The control unit 420 includes a main control section 421, a detection section 422, a timer 423, and a destruction section 424.

The main control section 421 has a function of determining whether or not to turn the encrypted data into the "dust" according to the present invention. There are three cases as described below, in which the decryption processing apparatus 2 in this embodiment turns the encrypted data into the "dust" data according to the present invention. In any case, the destruction section 424, which has received an instruction of turning the encrypted data into the "dust" data from the main control section 421, turns the encrypted data into the "dust" data with a method as described below. Note that when the main control section 421 does not turn the encrypted data in the present invention into the "dust" data and, in addition, the following condition is satisfied, the main control section 421 generates a notification of allowing the decryption device 37 to decrypt the encrypted data.

As described above, the destruction section 424 has the function of performing the processing of turning the encrypted data into the "dust" data. The processing is realized by irreversibly converting at least one of the solution generated prior to the solution required to decrypt the encrypted data, which is necessary for generating the solution required to decrypt the encrypted data to be turned into the "dust" data and the environmental information contained in the encrypted data required to generate the solution necessary for decrypting the encrypted data to be turned into the "dust" data, or by writing appropriate data over at least one of the solution and environmental information mentioned above. In short, if the irreversible change is caused in the previous solution or the environmental information, the encrypted data can be turned into the "dust" data. For writing appropriate data over the previous solution or the environmental information, the content of the data to be overwritten may be any data content as long as the overwriting thereof prevents the encrypted data from being decrypted. For overwriting a part of the encrypted data, for example, appropriate data such as data enumeration of "0" or "1" or alternate "0" and "1" data can be used as the content of data for overwriting. The repetition of an overwrite date or the repetition of information of a file size of another file updated last can be used as the data for overwriting. The data to be written over a part of the encrypted data may be changed at any timing. For irreversibly converting a part of the encrypted data, some calculation is performed on the part of the data. Thereafter, the truncation of the first digits or the last digits of the result of calculation, the truncation of the decimal numbers of the result of calculation, a JPEG conversion on the part of the data or the like is performed. The method of conversion may not be fixed and may be changed at any timing. For irreversibly changing or overwriting the environmental information corresponding to a part of the encrypted data, the "part" of the encrypted data to be converted or overwritten is required to be specified.

It is the detection section 422 that has a function of specifying the "part" of the encrypted data. The detection section 422 specifies the part of the encrypted data, which is to be irreversibly converted or overwritten, and transmits information of the specified part to the destruction section 424. The part of the encrypted data, which is specified by the detection section 422, is irreversibly converted or overwritten to be prevented from being decrypted and contains the environmental information. The "part" may be the environmental information itself or an appropriate range that is not quite large containing the environmental information, such as the header data. In this embodiment, the detection section 422 detects the part corresponding to the environmental information in the encrypted data. The detection section 422 specifies the part in the encrypted data, which is to be deleted or overwritten, and notifies the destruction section 424 of the specified part. The destruction section 424, which has received the notification, overwrites or irreversibly converts the part of the encrypted data, which corresponds to the environmental information and is specified by the detection section 422.

The timer 423 specifies a date and time of the timing of overwrite or conversion. Since a general OS has such a function, the timer 423 may be realized by borrowing the function of an OS.

The output control unit 430 transmits an output from the control unit 420 to an appropriate location through the bus 39. The control unit 420 outputs, for example, the encrypted data, the "dust" data obtained from the encrypted data, and the above-described notification for allowing the encryption device 37 to decrypt the encrypted data depending on the case. The cases where these outputs are performed and the destination of the outputs will be described below.

Next, a flow of a processing performed in the encryption system will be described.

The flow of the processing performed in the encryption system is as follows.

First, the encryption processing apparatus 1 encrypts the data to be processed to generate the encrypted data.

Subsequently, the encryption processing apparatus 1 transmits the encrypted data to the decryption processing apparatus 2.

Subsequently, the decryption processing apparatus 2, which has received the encrypted data, decrypts the encrypted data according to a requirement of the user of the decryption processing apparatus 2 to obtain the data to be processed. The decryption processing apparatus 2 also turns the encrypted data into the "dust" data according to a requirement of the user of the decryption processing apparatus 2 or according to predetermined timing.

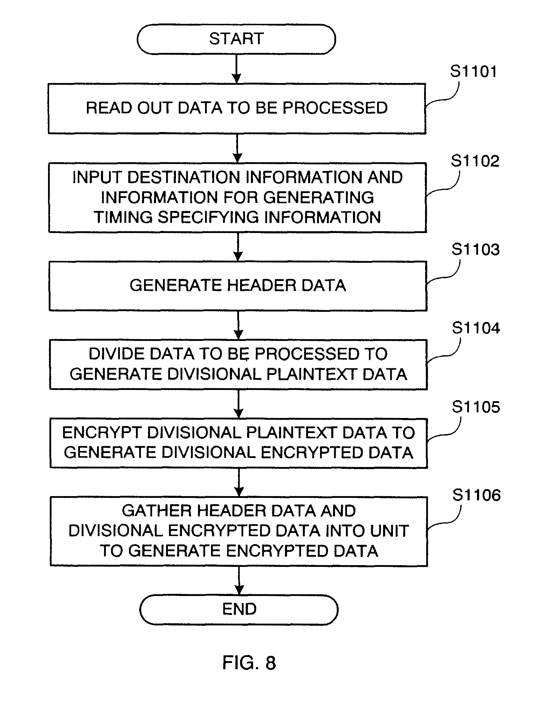

First, the above-described process, in which the encryption processing apparatus 1 encrypts the data to be processed to generate the encrypted data, will be described in detail referring to Fig. 8.

First, the data to be processed is read out (S1101). The data to be processed may be any data as long as it is required to be transmitted from the encryption processing apparatus 1 to the decryption processing apparatus 2. In this embodiment, the data to be processed is recorded in the HDD 23. The data to be processed may be some sort of data which is read from another recording medium such as an external recording medium into the encryption processing apparatus 1.

When a command for transmitting the data to be processed to the decryption processing apparatus 2 is input from, for example, the input device 25, the CPU 21 reads out the data to be processed from the HDD 23 to transmit the read data through the bus 29 to the encryption device 27. More specifically, the data to be processed is transmitted from the bus 29 to the interface unit 271 in the encryption device 27 and then to the pre-processing unit 272.

At almost the same time as the readout of the data to be processed, destination information indicating the decryption processing apparatus 2 corresponding to a destination of the transmission of the encrypted data obtained by encrypting the data to be processed and information which serves to generate the timing specifying information are input from the input device 25 (S1102). The destination information and the information which serves to generate the timing specifying information are transmitted by the CPU 21 through the bus 29 to the encryption device 27. More specifically, the destination information is transmitted through the interface unit 271 to the header generating unit 279, whereas the information which serves to generate the timing specifying information is transmitted through the interface unit 271 to the timing specifying information generating unit 278. In this embodiment, the environmental information, which is the file name of the encrypted data, is also input from the input device 25. The environmental information is also transmitted by the CPU 21 through the bus 29 to the header generating unit 279 in the encryption device 27.

The timing specifying information generating unit 278 generates the timing specifying information based on the received information which serves to generate the timing specifying information. The timing specifying information in this embodiment is a date and time for specifying a predetermined time such as X (hour), X (minute), X (month), X (day), 200X (year).

The timing specifying information generating unit 278 transmits the generated timing specifying information to the header generating unit 279.

The solution generating unit 274 generates the solution in the following method. The generated solution is transmitted from the solution generating unit 274 to both the algorithm generating unit 275 and the key generating unit 276. The solution generating unit 274 also transmits information for specifying the order of generation of the solution in the encryption processing apparatus 1 to the specifying information generating unit 277. The specifying information generating unit 277 transmits the information as the specifying information to either the encryption unit 273 or the header generating unit 279. It is only the specifying information indicating the order of generation of the first generated solution for the encrypted data in the encryption processing apparatus 1 (the first specifying information) that is transmitted to the header generating unit 279.

Note that the solutions used for encrypting the data to be processed in the encryption processing apparatus 1 are not necessarily to a series of solutions beginning with the first generated solution in the encryption processing apparatus 1. The reason therefor is as follows. For example, when another data to be processed has previously been encrypted in the encryption processing apparatus 1 to generate a plurality of continuous solutions, a series of solutions following the solutions generated in the previous encryption is used for encrypting the current data to be processed in some cases. Therefore, the specifying information indicating the order of generation of the solution which is used for encrypting the data to be processed in the current encryption is required.

How the solution generating unit 274 generates the solution will be described below.

When the interface unit 271 receives the data to be processed from the bus 29, the solution generating unit 274 receives the information of the reception of the data from the interface unit 271.

Upon reception of the information, the solution generating unit 274 starts generating the solution. In this embodiment, the solution generating unit 274 generates a solution each time the data to be processed is received by the interface unit 271. Note that the solution in this embodiment is an 8x8 matrix (X) although the solution is not limited thereto.

The solution generating unit 274 continuously generates the solutions as nonlinearly transiting ones, although not necessarily required. As a result, each of the solutions is a pseudorandom number.

In order to continuously generate the solutions in a nonlinearly transiting manner, the following methods are conceivable: (1) a method of including a raising calculation of the previous solution in the process of generating the solutions; (2) a method of including a multiplication of the previous two or more solutions in the process of generating the solutions; and a method of combining the methods (1) and (2).

In this embodiment, the solution generating unit 274 has a predetermined 01-th solution ($X_{01}$) and a predetermined 02-th solution ($X_{02}$) as an initial matrix corresponding to initial solutions (for example, the 01-th solution and the 02-th solution are stored in a predetermined memory such as the HDD 23 or the ROM 22). Note that the initial matrix included in the encryption processing apparatus 1 is the same as that included in the decryption processing apparatus 2 as described below.

The solution generating unit 274 assigns the initial matrix to the algorithm for generating solutions stored in the solution generating unit 274 to generate a first solution ($X_1$) as follows.

First solution ($X_1$) = $X_{02}X_{01} + \alpha$ ($\alpha$ = an 8x8 matrix)

This is the first solution to be generated.

Herein, $\alpha$ is the environmental information. The environmental information $\alpha$ is obtained by, for example, sequentially assigning a data string represented by "1" and "0", which is obtained from binary character codes constituting the file name, to the elements of the 8x8 matrix. If the number of digits in the data string represented by "1" and "0", which is obtained from binary character codes constituting the file name, is less than 64, which corresponds to the number of the elements of the 8x8 matrix, the data string is repeatedly used. It is to be noted that the way of using the environmental information may be appropriately determined. For example, when alphabet characters constitute the file name, "A" may be converted to 1, "B" to 2, "C" to 3, ... and "Z" to 26. Then a numerical value obtained by adding or multiplying all the numerical values obtained by converting the alphabets can be assigned to the elements of the 8x8 matrix.

Next, when the interface unit 271 receives the data to be processed from the bus 29, the solution generating unit 274 generates a second solution ($X_2$) as follows.

$$\text{Second solution } (X_2) = X_1 X_{02} + \alpha$$

In a similar manner, each time the interface unit 271 receives the data to be processed from the bus 29, the solution generating unit 274 generates a third solution, a fourth solution, an N-th solution and so forth as follows.

$$\text{Third solution } (X_3) = X_2X_1 + \alpha$$

$$\text{Fourth solution } (X_4) = X_3X_2 + \alpha$$

$$:$$

$$\text{N-th solution } (X_N) = X_{N-1}X_{N-2} + \alpha$$

The thus generated solutions are transmitted to the algorithm generating unit 275 and the key generating unit 276, and are stored in the solution generating unit 274. In this embodiment, in order to generate the N-th solution ($X_N$), the N-1-th solution ($X_{N-1}$) and the N-2-th solution ($X_{N-2}$), in short, the two solutions that are generated second last and last are used. Therefore, in generating a new solution, the solution generating unit 274 must store the two previous solutions which are generated immediately before the new solution (or some unit other than the solution generating unit 274 must store the two solutions).

Note that the thus generated solutions become chaotic to nonlinearly transit and are therefore pseudorandom numbers.

The matrix $\alpha$ corresponding to environmental information is not necessarily required to be used for every case where the solution is generated. For example, $\alpha$ may be used for the first solution ($X_1$) = $X_{02}X_{01}$ + $\alpha$ and for the case where the first solution is used. The second and the subsequent solutions may be obtained by a general formula: N-th solution ($X_N$) = $X_{N-1}X_{N-2}$.

In order to cause the nonlinear transition, besides the use of the above-described formula:

$$\text{N-th solution } (X_N) = X_{N-1}X_{N-2} \ (+\alpha)$$

the use of the following formulae is conceivable.

Note that the parentheses for $\alpha$ mean that $\alpha$ is not necessarily required for obtaining the second and the subsequent solutions, which is applied to the following exemplified case.

For example,

(a)

$$\text{N-th solution } (X_N) = (X_{N-1})^P(+\alpha)$$

(b)

$$\text{N-th solution } (X_N) = (X_{N-1})^P(X_{N-2})^Q(X_{N-3})^R(X_{N-4})^S(+\alpha)$$

(c)

$$\text{N-th solution } (X_N) = (X_{N-1})^P+(X_{N-2})^Q(+\alpha)$$

where each of P, Q, R, and S is a predetermined constant. The solution generating unit 274 has one initial matrix when Formula (a) is used, two for the use of Formula (c), and four for the use of Formula (b).

If the above-described $\alpha$ is sequentially created from the environmental information described above to generate common information, the confidentiality of communication can be further enhanced.

The header generating unit 279, which has received the destination information, the timing specifying information, and the first specifying information, generates the header data (S1103). The generated header data contains the destination information, the timing specifying information, the first specifying information, and the environmental information.

The header data is transmitted from the header generating unit 279 to the connecting unit 280.

The pre-processing unit 272 divides the data to be processed into the divisional plaintext data, each composed of a predetermined number of bits (S1104).

Theremaybe apluralityof methods of generating the divisional plaintext data from the data to be processed (specifically, a data length of the divisional plaintext data may differ for each divisional plaintext data), but, in this embodiment, the data lengths of all the divisional plaintext data are the same (for example, an 8-bit length). The generated divisional plaintext data are transmitted from the pre-processing unit 272 to the encryption unit 273.

In parallel with the generation of the divisional plaintext data, the algorithm and the solution are generated. The algorithm and the solution are used for encrypting the divisional plaintext data to obtain the divisional encrypted data.

The algorithm is generated by the algorithm generating unit 275.

The algorithm generating unit 275 in this embodiment generates the algorithm based on the solution.

The algorithm generating unit 275 in this embodiment generates the algorithm as follows.

The algorithm in this embodiment is defined as "being obtained by raising the 8x8 matrix X corresponding to the solution to the a-th power, rotating the matrix in a clockwise manner by $n \times 90°$, and then multiplying the rotated matrix by Y when the 8-bit divisional plaintext data is a $1 \times 8$ matrix Y".

Although a is a predetermined constant in some cases, a is a numerical value varying based on the solution in this embodiment. Specifically, the algorithm in this embodiment varies based on the solution. For example, a may be defined as a remainder obtained by dividing the numerical value obtained by adding all the numerical values corresponding to the matrix elements contained in the solution, which is the 8x8 matrix, by 5 (however, a = 1 when the remainder is 0).

The above-described n is the key and is a predetermined numerical value. When the key is a constant value, n is fixed. As described below, the key varies based on the solution. Specifically, in this embodiment, n also varies based on the solution.

It is to be noted that the algorithm can be determined in another manner. Moreover, the algorithm may be fixed.

In this embodiment, the algorithm generating unit 275 generates the algorithm for each reception of the solution from the solution generating unit 274 and transmits the generated algorithm to the encryption unit 273.

In parallel with the generation of the divisional plaintext data, the key generating unit 276 generates the key used for encrypting the divisional plaintext data.

The key generating unit 276 generates the key based on the solution.

In this embodiment, the key generating unit 276 generates the key as follows.

The key in this embodiment corresponds to a numerical value obtained by adding all the values corresponding to the elements of the matrix contained in the solution, which is the 8x8 matrix. Therefore, the key varies based on the solution in this embodiment.

Note that the key can also be determined in another manner.

In this embodiment, for each reception of the solution from the solution generating unit 274, the key generating unit 276 generates the key and transmits the generated key to the encryption unit 273.

The encryption unit 273 encrypts the divisional plaintext data received from the pre-processing unit 272 based on the algorithm received from the algorithm generating unit 275 and the key received from the key generating unit 276 (S1105).

As described above, the algorithm is definedas "being obtained by raising the 8x8 matrix X corresponding to the solution to the a-th power, rotating the matrix in a clockwise manner by nx90° and then multiplying the rotated matrix by Y when the 8-bit divisional plaintext data is a $1 \times 8$ matrix Y", and n corresponding to the key is such a numerical value as described above.

For example, when a is 3 and n is 6, the $8 \times 8$ matrix, which is obtained by rotating by 6x90° = 540° in a clockwise manner another 8x8 matrix obtained by raising X to the third power, is multiplied by the divisional plaintext data to perform the encryption.

The thus generated data is the divisional encrypted data.

Note that in encrypting the second and the subsequent divisional plaintext data, the encryption unit 273 mixes the solution received from the solution generating unit 274 into the divisional plaintext data and then encrypts the divisional plaintext data to obtain the divisional encrypted data.

In this embodiment, the steps of S1104 and S1105 are repeated until the entire data to be processed is encrypted to be the divisional encrypted data.

The divisional encrypted data are transmitted to the connecting unit 280. The connecting unit 280 connects the header data 501 and the divisional encrypted data 502 into a unit having the structure as illustrated in Fig. 4 (A) and generates the encrypted data (S1106). The order of arrangement of the divisional encrypted data corresponds to that of the original divisional plaintext data.

In the manner as described above, the process, in which the encryption processing apparatus 1 encrypts the data to be processed to generate the encrypted data, is first terminated.

The thus generated encrypted data is transmitted through the bus 29 to the communication device 28 in the encryption processing apparatus 1.

The communication device 28 transmits the encrypted data to the decryption processing apparatus 2 designated by the MAC address contained in the header data of the encrypted data through the network N.

The encrypted data transmitted to the decryption processing apparatus 2 is received by the communication device 38 in the decryption processing apparatus 2. The encrypted data is transmitted to the HDD 33 through the bus 39 to be recorded therein.

A processing of decrypting the encrypted data, which can be executed in the decryption processing apparatus 2 receiving the encrypted data, will now be described.

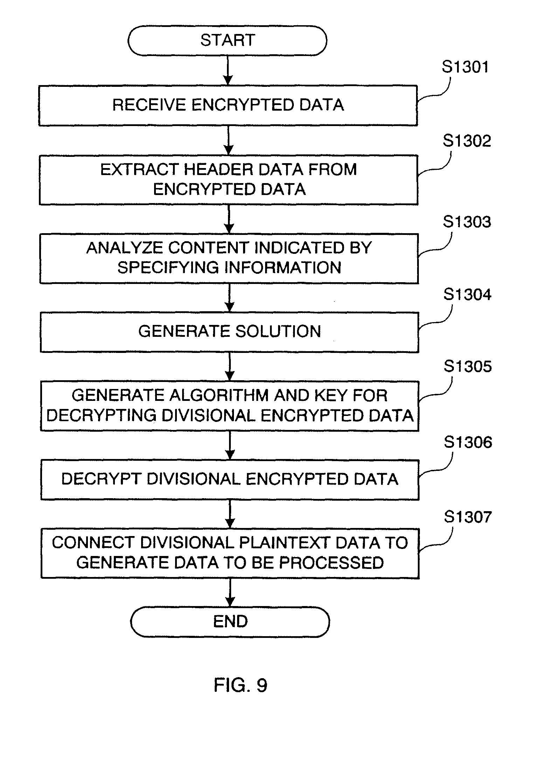

Hereinafter, with respect to the decryption process, a processing of decrypting the encrypted data back into the data to be processed will be described in detail referring to Fig. 9.

When the user operates the input device 35 of the decryption processing apparatus 2 to input an instruction of decrypting the encrypted data (S1301), the instruction is transmitted to the CPU 31. Based on the instruction, the CPU 31 transmits the encrypted data to the decryption device 37.

The encrypted data is received by the pre-processing unit 372 in the decryption device 37 through the interface unit 371.

Then, the pre-processing unit 372 extracts the header data from the received encrypted data (S1302) and further extracts the first specifying information from the header data to transmit the extracted first specifying information to the specifying information analyzing unit 377.

The specifying information analyzing unit 377, which has received the first specifying information, specifies the order of generation of the solution which is to be used for decrypting the first divisional encrypted data in the encryption processing apparatus 1 (S1303). Then, the specifying information analyzing unit 377 transmits the specified information to the solution generating unit 374.

The pre-processing unit 372 extracts the header data from the received encrypted data and further extracts the environmental information from the header data to transmit the extracted environmental information to the solution generating unit 374.

The solution generating unit 374 generates the solution for decrypting the divisional encrypted data based on the received specifying information and environmental information (S1304).

The solution is generated in the solution generating unit 374 in the decryption device 37 of the decryptionprocessingapparatus 2 through the same process as that performed in the solution generating unit 274 in the encryption processing apparatus 1. In this embodiment, the solution is generated by using the initial solution, the environmental information, and the specifying information.

As described above, the solution generating unit 374 has the same initial matrix and the same algorithm for generating the solutions as those stored in the solution generating unit 274 of the encryption processing apparatus 1 associated with the decryption device 37 including the solution generating unit 374. Therefore, in the case where the initial matrix, the algorithm for generating the solutions, and the environmental information are used, when the solution generated in the decryption device 37 of the decryption processing apparatus 2 is compared with the solution generated in the encryption device 27 of the encryption processing apparatus 1 in the same order, the solutions are the same. The order of the solution to be generated is determined by the specifying information.

The generated solution is transmitted from the solution generating unit 374 to the algorithm generating unit 375 and the key generating unit 376.

The algorithm generating unit 375 and the key generating unit 376 respectively generate the algorithm and the key for decrypting the divisional encrypted data (S1305).

The algorithm generating unit 375 generates the algorithm based on the received information. The process, in which the algorithm generating unit 375 of the decryption processing apparatus 2 generates the algorithm, is the same as the process in which the algorithm generating unit 275 of the encryption processing apparatus 1 generates the algorithm. The algorithm generated by the algorithm generating unit 375 based on the same solution is always the same as that generated in the algorithm generating unit 275 of the encryption processing apparatus 1.

On the other hand, the key generating unit 376 generates the key based on the received information. The process in which the key generating unit 376 of the decryption processing apparatus 2 generates the key is the same as that in which the key generating unit 276 of the encryption processing apparatus 1 generates the key. The key generated by the key generating unit 376 based on the same solution is always the same as that generated by the key generating unit 276 of the encryption processing apparatus 1.

The decryption processing apparatus 2 generates the same solution as that generated in the encryption processing apparatus 1 based on the information indicating the order of generation of the solution used for encrypting the specifying information in the encryption processing apparatus 1 and then generates the algorithm and the key based on the generated solution. Therefore, the decryption processing apparatus 2 can generate the same algorithm and key as those used for encrypting the specifying information in the encryption processing apparatus 1.

The generated algorithm is transmitted from the algorithm generating unit 375 to the decryption unit 373. The generated key is transmitted from the key generating unit 376 to the decryption unit 373.

Next, by using the algorithm and the key respectively received from the algorithm generating unit 375 and the key generating unit 376, the decryption unit 373 decrypts the divisional encrypted data (S1306).

More specifically, the decryption unit 373 generates the algorithm for performing the decryption processing(the definition: "when the divisional encrypted data is regarded as a $1 \times 8$ matrix Z, the divisional plaintext data is obtained by raising the 8x8 matrix X to the a-th power, rotating the obtained matrix by nx90° in a clockwise manner, and then multiplying an inverse matrix of the rotated matrix by Z") based on the algorithm received from the algorithm generating unit 375 (the definition: "the divisional encrypted data is obtained by raising the 8x8 matrix X corresponding to the solution to the a-th power, rotating the matrix in a clockwise manner by n $\times$ 90°, and then multiplying the rotated matrix by Y when the 8-bit encrypted plaintext data is the 1x8 matrix Y") and performs the decryption processing by performing with the key a calculation according to the above-described definition.

In the above-described manner, the decryption unit 373 decrypts the divisional encrypted data transmitted from the pre-processing unit 372 to generate the divisional plaintext data.

The decryption unit 373 transmits the decrypted divisional plaintext data to the connecting unit 379.

The decryption unit 373 also extracts the specifying information contained in the divisional plaintext data to transmit the extracted specifying information to the specifying information analyzing unit 377. The specifying information analyzing unit 377 transmits the content of the specifying information to the solution generating unit 374. The solution generating unit 374 generates the solution based on the transmitted information to transmit the generated solution to the algorithm generating unit 375 and the key generating unit 376. The algorithm generating unit 375 and the key generating unit 376, which have received the solution, generate the algorithm and the key, respectively, by using the received solution, and transmit the generated algorithm or key to the decryption unit 373. Then, the decryption unit 373 decrypts the second divisional encrypted data to generate the second divisional plaintext data. Specifically, the decryption device 37 repeats the above-described steps of S1303 to S1306 until all the divisional encrypted data are decrypted.

As described above, the decryption processing apparatus 2 in this embodiment uses the specifying information, which is extracted by decrypting the divisional encrypted data, to decrypt the subsequent divisional encrypted data. Fig. 4 (B) schematically illustrates a state of the decryption. Fig. 4(B) illustrates the divisional plaintext data denoted by the reference numeral 503 and the specifying information in a key-like form denoted by K.

Next, the decrypted divisional plaintext data is transmitted to the connecting unit 379. The connecting unit 379 connects the received divisional plaintext data into a unit to obtain the data to be processed (S1307).

In this manner, the decryption processing apparatus 2 can decrypt the encrypted data back into the data to be processed.

The generated data to be processed is transmitted from the connecting unit 379 to the interface unit 371 and then through the bus 39 to, for example, the HDD 33. The data to be processed is appropriately used in the decryption processing apparatus 2.

Note that in the above-described example, both the algorithm and the key used for generating the encrypted data are generated in the algorithm generating unit 375 and the key generating unit 376, respectively. However, when the agreement to fix at least one of the algorithm and the key is made between the encryption processing apparatus 1 and the decryption processing apparatus 2, only one of the algorithm and the key, which is not fixed, may be generated based on the solution. In such a case, as the fixed one of the algorithm and the key, the same one is always used.

Next, a processing of turning the encrypted data into the "dust" data, which is performed in the decryption processing apparatus 2, will be described.

The encrypted data is turned into the "dust" data in the decryption processing apparatus 2 in the following three cases.

[Case 1]

In Case 1, the encrypted data is turned into the "dust" data based on the user's intention.

When the user inputs a command of turning the encrypted data into the "dust" data through the input device 35 (for example, the user drags an icon associated with the encrypted data and drops the icon over another icon associated with a program for turning the encrypted data into the "dust" data), the encrypted data is turned into the "dust" data.

Upon input of the command, the content of the command is transmitted through the bus 39 to the input control unit 410. The input control unit 410 analyzes the content and transmits the content to the main control section 421 of the control unit 420.

The main control section 421, which has received the content, determines to turn the encrypted data into the "dust" according to the present invention to read out the encrypted data specified by the command from, for example, the HDD 33. The encrypted data is read out through the bus 39 and the input control unit 410. The main control section 421 also transmits an instruction of executing theprocessingof turning the encrypted data into the "dust" according to the present invention to the destruction section 424. On the other hand, the main control section 421 transmits an instruction of specifying a part to be destroyed in the encrypted data to the detection section 422.

The detection section 422 specifies the part to be destroyed in the encrypted data. Since the part to be destroyed in the encrypted data in this embodiment is the part corresponding to the environmental information of the header data contained in the encrypted data, the detection section 422 specifies an area corresponding to the environmental information in the encrypted data.

The detection section 422 notifies the destruction section 424 of the detected area.

The destruction section 424, which has received the above-described instruction from the main control section 421 and the above-described notification from the detection section 422, executes the processing of turning the encrypted data into the "dust". The processing is executed by irreversibly converting the area specified by the detection section 422 or writing arbitrary data irrelevant to the encrypted data over the specified area. The encrypted data which is subj ected to such a processing can no longer be decrypted.

The main control section 421 transmits the encrypted data which is subj ected to the above-described processing to be prevented from being decrypted to an appropriate location where the encrypted data is to be recorded, for example, to the HDD 33, through the output control unit 430 and the bus 39. The encrypted data which can no longer be decrypted is recorded in the HDD 33.

In Case 1 described above, a part of the encrypted data is destroyed to prevent the encrypted data from being decrypted, but it is also possible to prevent the encrypted data from being decrypted without destroying the encrypted data.

Such a case will be described below.

In this case, the user inputs a command of turning the encrypted data into the "dust" data from the input device 35. When the main control section 421, which has received the command, determines to turn the encrypted data into what is referred to as the "dust" in the present invention, the input device 35 transmits an instruction of causing an irreversible change in the solution generated prior to the solution required to decrypt the encrypted data, which is necessary for generating the solution required to decrypt the encrypted data, to the decryption device 37. In this embodiment, the initial solution is indispensably required to generate the solution as described above. In this embodiment, the decryption device 37, which has received the instruction of causing the irreversible change in the solution necessary for generating the solution for decrypting the encrypted data from the main control section 421, irreversibly converts the initial solution or writes arbitrary data over the initial solution to cause the irreversible change in the initial solution. Since the initial solution is stored in the solution generating unit 374 in this embodiment, the solution generating unit 374 causes the irreversible change in the initial solution stored therein. In this manner, the encrypted data can no longer be decrypted.

Note that as the processing of preventing the encrypted data from being decrypted, two exemplary cases, i.e., the case where the irreversible change is caused in a part (environmental information) of the encrypted data and the case where the irreversible change is caused in the initial solution, have been described. Each of the two exemplary cases has an advantage and a drawback.

In the latter case, it is not necessary to cause any change in the encrypted data itself. Therefore, the latter case is advantageous in that the encrypted data cannot be decrypted even when the encrypted data is written in a recording medium such as a CD-ROM (in which overwriting is not allowed (read-only)). This advantage is significant in that the encrypted data recorded in such a recording medium can be turned into the "dust" data without causing any change in the encrypted data itself. However, the latter case has a drawback as follows. In the latter case, once the irreversible change is caused in the initial solution, the encryption processing apparatus 1 and the decryption processing apparatus 2 cannot generate a common solution any longer. As a result, after the irreversible change is caused in the initial solution, there is a possibility that the encrypted data obtained in the encryption processing apparatus 1 cannot be decrypted in the decryption processing apparatus 2. Such a situation can be avoided in the following manner, for example. Apiece of initial solutions, which are common to the encryptionprocessing apparatus 1 and the decryption processing apparatus 2 and differ from each other, are prepared in advance. Then, when the irreversible change is caused in one of the initial solutions in the decryption processing apparatus 2, the decryption processing apparatus 2 notifies the encryption processing apparatus 1 of the thus caused irreversible change to allow the encryption processing apparatus 1 and the decryption processing apparatus 2 to always use the same initial solutions in a sequential manner. Alternatively, when the irreversible change is caused in the initial solution, the encryption processing apparatus 1 is notified of a new initial solution generated in the decryption processing apparatus 2 or the decryption processing apparatus 2 is notified of a new initial solution generated in the encryption processing apparatus 1 which has been notified of the irreversible change caused in the initial solution. In this manner, the encryption processing apparatus 1 and the decryption processing apparatus 2 are allowed to store the same new initial solution, thereby avoiding the above-described situation. However, the latter case is disadvantageous in that the method as described above is required to be prepared to decrypt in the decryption processing apparatus 2 the encrypted data generated in the encryptionprocessing apparatus 1 even after the irreversible change is caused in the initial solution.

The former case has a drawback and an advantage opposite to those of the latter case.

The drawbacks and the advantages in the case where the irreversible change is caused in a part (environmental information) of the encrypted data and in the case where the irreversible change is caused in the initial solution in the processing of preventing the encrypted data from being decrypted are the same in Cases 2 and 3.

Note that Case 1 can be executed even if the encrypted data does not contain the timing specifying information.

[Case 2]

In Case 2, the encrypted data is automatically turned into the "dust" data at predetermined timing.

As described above, the encrypted data in this embodiment contains the timing specifying information. The main control section 421, which executes Case 2, has a function of constantly monitoring whether or not the encrypted data is present in the decryption processing apparatus 2 and reading the timing specifying information contained in the encrypted data when the encrypted data is present. In order to execute the function, the main control section 421 constantly or periodically searches through the decryption processing apparatus 2 to monitor the presence of the encrypted data.

Upon detection of the encrypted data containing the timing specifying information in the decryption processing apparatus 2, the main control section 421 as descried above, for example, constantly monitors whether or not the timing specified by the timing specifying information has come. Note that the monitoring can be performed for each of the encrypted data when a plurality of encrypted data is present in the decryption processing apparatus 2. In order to execute such monitoring, the main control section 421 constantly obtains the information about the current date and time from the timer 423.

When the main control section 421 detects that the timing specified by the timing specifying information contained in a piece of encrypted data has come, the main control section 421 determines to turn the encrypted data containing the timing specifying information into the "dust" data.

The content of the processing performed after such a determination of the main control section 421 is the same as that in Case 1 performed after the determination as described above. More specifically, the processing of preventing the encrypted data from being decrypted is executed in the decryption processing apparatus 2. The processing is executed by causing the irreversible change in a part (environmental information) of the encrypted data or by causing the irreversible change in the initial solution.

[Case 3]

Case 3 corresponds to an intermediate case between Case 1 and Case 2.

As described above, the encrypted data in this embodiment contains the timing specifying information.

Case 3 is executed when the user inputs a command for decrypting the encrypted data to the input device 35 and the following condition is satisfied.

When the user inputs the command for decrypting the encrypted data, the input is transmitted through the input control unit 410 to the main control section 421.

The main control section 421, which has received the input, has the function of reading out the timing specifying information contained in the encrypted data specified by the command. The main control section 421 determines whether or not the timing specified by the timing specifying information contained in the encrypted data has come based on the comparison with the current date and time read out from the timer 423.

If the timing specified by the timing specifying information contained in the encrypted data has not come yet, the main control section 421 allows the decryption device 37 to decrypt the encrypted data. Given such allowance, the decryption device 37 performs the processing as described above to decrypt the encrypted data.

If the timing specified by the timing specifying information contained in the encrypted data has come, the main control section 421 determines to turn the encrypted data into the "dust" data.

The content of the processing performed after such a determination of the main control section 421 is the same as that in Case 1 after the determination as described above. More specifically, the processing of preventing the encrypted data from being decrypted is executed in the decryption processing apparatus 2. The processing is executed by causing the irreversible change in a part (environmental information) of the encrypted data or by causing the irreversible change in the initial solution.

## EP 2 117 158 A1

**Claims**

1. A decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions, the solution generating means storing an initial solution used for generating a first solution, for continuously generating the solutions;
encryption means for encrypting the divisional plaintext data by using the solutions to convert the divisional plaintext data into divisional encrypted data; and
connection means for connecting the divisional encrypted data to obtain the encrypted data,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into the divisional plaintext data; and
connection means for connecting the divisional plaintext data to obtain the data to be processed;

destruction trigger input means for inputting destruction trigger information for starting a processing of preventing the encrypted data from being decrypted; and
processing means for destructing a solution generated prior to the solutions used for decrypting the encrypted data in irreversible manner, when the destruction trigger information is input, the prior solution being necessary for generating the solutions used for decrypting the encrypted data.

2. A decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions and invariable environmental information to be contained in the encrypted data to be generated, the solution generating means storing an initial solution used for generating a first solution, for continuously generating the solutions;
encryption means for encrypting the divisional plaintext data by using the solutions to convert the divisional plain text data into divisional encrypted data; and
connection means for connecting the divisional encrypted data to obtain the encrypted data containing the environmental information,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed;

destruction trigger input means for inputting destruction trigger information for starting a processing of preventing the encrypted data from being decrypted; and
processing means for destructing the environmental information contained in the encrypted data in irreversible manner, when the destruction trigger information is input, the prior solution being necessary for generating the solutions used for decrypting the encrypted data.

3.  A decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions, the solution generating means storing an initial solution used for generating a first solution, for continuously generating the solutions;
encryption means for encrypting the divisional plaintext data by using the solutions to convert the divisional plain text data into divisional encrypted data;
timing specifying information generating means for generating timing specifying information for specifying timing to prevent the encrypted data containing the timing specifying information from being decrypted; and
connection means for connecting the divisional encrypted data to obtain the encrypted data containing the timing specifying information,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed;
timing specifying information reading means for reading the timing specifying information from the encrypted data; and
processing means for destructing a solution generated prior to the solutions used for decrypting the encrypted data in irreversible manner, the prior solution being necessary for generating the solutions used for decrypting the encrypted data, and processing means monitors whether or not the timing specified by the timing specifying information read by the timing specifying information reading means has come , and processing means destructs the solution if the timing has come.

4.  A decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions and invariable environmental information to be contained in the encrypted data to be generated, the solution generating means storing an initial solution used for generating a first solution, for continuously generating the solutions;
encryption means for encrypting the divisional plaintext data by using the solutions to convert the divisional plain text data into divisional encrypted data;
timing specifying information generating means for generating timing specifying information for specifying timing to prevent the encrypted data containing the timing specifying information from being decrypted; and
connection means for connecting the divisional encrypted data to obtain the encrypted data containing the environmental information and the timing specifying information,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed;

timing specifying information reading means for reading the timing specifying information from the encrypted data; and
processing means for destructing the environmental information contained in the encrypted data in irreversible manner, and processing means monitors whether or not the timing specified by the timing specifying information read by the timing specifying information reading means has come , and processing means destructs the solution if the timing has come.

5. A decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions, the solution generating means storing an initial solution used for generating a first solution, for continuously generating the solutions;
encryption means for encrypting the divisional plaintext data by using the solutions to convert the divisional plain text data into divisional encrypted data;
timing specifying information generating means for generating timing specifying information for specifying timing to prevent the encrypted data containing the timing specifying information from being decrypted; and
connection means for connecting the divisional encrypted data to obtain the encrypted data containing the timing specifying information,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed;

decryption trigger input means for inputting decryption trigger information for starting decryption of the encrypted data;
timing specifying information reading means for reading the timing specifying information from the encrypted data when the decryption trigger information is input from the decryption trigger input means; and
processing means for receiving the timing specifying information read by the timing specifying information reading means when the decryption trigger information is input to monitor whether or not the timing specified by the timing specifying information has come and allowing the decryption unit to decrypt the encrypted data if the timing has not come yet while causing an irreversible change in a solution generated prior to the solutions used for decrypting the encrypted data, the prior solution being necessary for generating the solutions used for decrypting the encrypted data, if the timing has come.

6. A decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;

solution generating means for continuously generating solutions, each being uniquely determined based on previous solutions and invariable environmental information to be contained in the encrypted data to be generated, the solution generating means storing an initial solution used for generating a first solution, for continuously generating the solutions;

encryption means for encrypting the divisional plaintext data by using the solutions to convert the divisional plain text data into divisional encrypted data;

timing specifying information generating means for generating timing specifying information for specifying timing to prevent the encrypted data containing the timing specifying information from being decrypted; and

connection means for connecting the divisional encrypted data to obtain the encrypted data containing the environmental information and the timing specifying information,

the decryption processing apparatus comprising:

a decryption unit comprising:

dividing means for dividing the encrypted data into a plurality of pieces of divisional encrypted data, each being composed of a predetermined number of bits;

solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions;

decryption means for decrypting the divisional encrypted data by using the solutions to convert the divisional encrypted data into divisional plain text data; and

connection means for connecting the divisional plaintext data to obtain the data to be processed;

decryption trigger input means for inputting decryption trigger information for starting decryption of the encrypted data;

timing specifying information reading means for reading the timing specifying information from the encrypted data when the decryption trigger information is input from the decryption trigger input means; and

processing means for receiving the timing specifying information read by the timing specifying information reading means when the decryption trigger information is input to determine whether or not the timing specified by the timing specifying information has come and allowing the decryption unit to decrypt the encrypted data if the timing has not come yet while causing an irreversible change in the environmental information contained in the encrypted data if the timing has come.

7. A decryption processing apparatus according to Claim 1, 3, or 5, wherein the processing means causes the irreversible change in the solution generated prior to the solutions used for decrypting the encrypted data, the prior solution being necessary for generating the solutions used for decrypting the encrypted data, by writing appropriate data over the prior solution, or irreversibly converting the prior solution.

8. A decryption processing apparatus according to Claim 2, 4, or 6, wherein the processing means causes the irreversible change in the environmental information by writing appropriate data over the environmental information or irreversibly converting the environmental information.

9. A decryption processing apparatus according to any one of Claims 1 to 6, wherein:

the solution generating means in the encryption processing apparatus generates the solutions each time the encryption means encrypts the divisional plaintext data; and

the solution generating means in the decryption processing apparatus generates the solutions each time the decryption means decrypts the divisional encrypted data.

10. A decryption processing apparatus according to any one of Claims 1 to 6, wherein:

the encryption means in the encryption processing apparatus uses a predetermined key and a predetermined algorithm to encrypt the divisional plaintext data, and the encryption processing apparatus includes means of generating at least one of the predetermined key and the predetermined algorithm used for the encryption based on the solutions; and
the decryption means in the decryption processing apparatus uses a predetermined key and a predetermined algorithm to decrypt the divisional encrypted data, and the decryption processing apparatus includes means of generating at least one of the predetermined key and the predetermined algorithm used for the decryption based on the solutions.

11. A data processing method executed in a decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions, the solution generating means storing an initial solution used for generating a first solution, for continuously generating the solutions;
encryption means for encrypting the divisional plaintext data by using the solutions to convert the divisional plain text data into divisional encrypted data; and
connection means for connecting the divisional encrypted data to obtain the encrypted data,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed;

destruction trigger input means; and
processing means,
the data processing method comprising the steps, executed by the processing means, of:
receiving destruction trigger information for starting a processing of preventing the encrypted data from being decrypted from the destruction trigger input means; and
causing an irreversible change in a solution generated prior to the solutions used for decrypting the encrypted data, the prior solution being necessary for generating the solutions used for decrypting the encrypted data, when the destruction trigger information is received.

12. A data processing method executed in a decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions and invariable environmental information to be contained in the encrypted data to be generated, the solution generating means storing an initial solution used for generating a first solution, for continuously generating the solutions;

encryption means for encrypting the divisional plaintext data by using the solutions to convert the divisional plain text data into divisional encrypted data; and connection means for connecting the divisional encrypted data to obtain the encrypted data containing the environmental information,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed;

destruction trigger input means; and
processing means,
the data processing method comprising the steps, executed by the processing means, of:
receiving destruction trigger information for starting a processing of preventing the encrypted data from being decrypted from the destruction trigger input means; and
causing an irreversible change in the environmental information contained in the encrypted data when the destruction trigger information is received.

13. A data processing method executed in a decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions, the solution generatingmeans storing an initial solution used for generating a first solution, for continuously generating the solutions;
encryption means for encrypting the divisional plaintext data by using the solutions to convert the divisional plain text data into divisional encrypted data;
timing specifying information generating means for generating timing specifying information for specifying timing to prevent the encrypted data containing the timing specifying information from being decrypted; and
connection means for connecting the divisional encrypted data to obtain the encrypted data containing the timing specifying information,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed; and

processing means,
the data processing method comprising the steps, executed by the processing means, of:
reading the timing specifying information from the encrypted data; and

monitoring whether or not the timing specified by the timing specifying information read in the step of reading the timing specifying information has come and causing an irreversible change in a solution generated prior to the solutions used for decrypting the encrypted data, the prior solution being necessary for generating the solutions used for decrypting the encrypted data, if the timing has come.

**14.** A data processing method executed in a decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions and invariable environmental information to be contained in the encrypted data to be generated, the solution generating means storing an initial solution used for generating a first solution, for continuously generating the solutions;
encryption means for encrypting the divisional plaintext data by using the solutions to convert the divisional plain text data into divisional encrypted data;
timing specifying information generating means for generating timing specifying information for specifying timing to prevent the encrypted data containing the timing specifying information from being decrypted; and
connection means for connecting the divisional encrypted data to obtain the encrypted data containing the environmental information and the timing specifying information,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed; and

processing means,
the data processing method comprising the steps, executed by the processing means, of:
reading the timing specifying information from the encrypted data; and
monitoring whether or not the timing specified by the timing specifying information read in the step of reading the timing specifying information has come and causing an irreversible change in the environmental information contained in the encrypted data if the timing has come.

**15.** A data processing method executed in a decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions, the solution generating means storing an initial solution used for generating a first solution, for continuously generating the solutions;
encryption means for encrypting the divisional plaintext data by using the solutions to convert the divisional plain text data into divisional encrypted data;
timing specifying information generating means for generating timing specifying information for specifying timing to prevent the encrypted data containing the timing specifying information from being decrypted; and
connection means for connecting the divisional encrypted data to obtain the encrypted data containing the timing specifying information,

the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed;

decryption trigger input means; and
processing means,
the data processing method comprising the steps, executed by the processing means, of:
receiving decryption trigger information for starting decryption of the encrypted data from the decryption trigger input means;
reading the timing specifying information from the encrypted data when the decryption trigger information is input from the decryption trigger input means; and
receiving the timing specifying information read in the step of reading the timing specifying information when the decryption trigger information is input to determine whether or not the timing specified by the timing specifying information has come and allowing the decryption unit to decrypt the encrypted data if the timing has not come yet while causing an irreversible change in a solution generated prior to the solutions used for decrypting the encrypted data, the prior solutionbeingnecessary for generating the solutions used for decrypting the encrypted data, if the timing has come.

16. A data processing method executed in a decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions and invariable environmental information to be contained in the encrypted data to be generated, the solution generating means storing an initial solution used for generating a first solution, for continuously generating the solutions;
encryption means for encrypting the divisional plaintext data by using the solutions to convert the divisional plain text data into divisional encrypted data;
timing specifying information generatingmeans for generating timing specifying information for specifying timing to prevent the encrypted data containing the timing specifying information from being decrypted; and
connection means for connecting the divisional encrypted data to obtain the encrypted data containing the environmental information and the timing specifying information,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed;

decryption trigger input means; and

processing means,

the data processing method comprising the steps, executed by the processing means, of:

receiving decryption trigger information for starting decryption of the encrypted data from the decryption trigger input means;

reading the timing specifying information from the encrypted data when the decryption trigger information is input from the decryption trigger input means; and

receiving the timing specifying information read in the step of reading the timing specifying information when the decryption trigger information is input to determine whether or not the timing specified by the timing specifying information has come and allowing the decryption unit to decrypt the encrypted data if the timing has not come yet while causing an irreversible change in the environmental information contained in the encrypted data if the timing has come.

**17.** A computer program for a computer as a decryptionprocessing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;

solution generating means for continuously generating solutions, each being uniquely determined based on previous solutions, the solution generating means storing an initial solution used for generating a first solution, for continuously generating the solutions;

encryption means for encrypting the divisional plaintext data by using the solutions to convert the divisional plain text data into divisional encrypted data; and

connection means for connecting the divisional encrypted data to obtain the encrypted data,

the decryption processing apparatus comprising:

a decryption unit comprising:

dividing means for dividing the encrypted data into a plurality of pieces of divisional encrypted data, each being composed of a predetermined number of bits;

solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions;

decryption means for decrypting the divisional encrypted data by using the solutions to convert the divisional encrypted data into divisional plain text data; and

connection means for connecting the divisional plaintext data to obtain the data to be processed;

destruction trigger input means; and

the computer connected thereto,

the computer program being for causing the computer to execute the steps of:

receiving destruction trigger information for starting a processing of preventing the encrypted data from being decrypted from the destruction trigger input means; and

causing an irreversible change in a solution generated prior to the solutions used for decrypting the encrypted data, the prior solution being necessary for generating the solutions used for decrypting the encrypted data, when the destruction trigger information is received.

**18.** A computer program for a computer as a decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;

solution generating means for continuously generating solutions, each being uniquely determined based on previous solutions and invariable environmental information to be contained in the encrypted data to be generated, the solution generating means storing an initial solution used for generating a first solution, for continuously generating the solutions;

encryption means for encrypting the divisional plaintext data by using the solutions to convert the divisional plain text data into divisional encrypted data; and

connection means for connecting the divisional encrypted data to obtain the encrypted data containing the environmental information,

the decryption processing apparatus comprising:

    a decryption unit comprising:

        dividing means for dividing the encrypted data into a plurality of pieces of divisional encrypted data, each being composed of a predetermined number of bits;

        solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions;

        decryption means for decrypting the divisional encrypted data by using the solutions to convert the divisional encrypted data into divisional plain text data; and

        connection means for connecting the divisional plaintext data to obtain the data to be processed;

    destruction trigger input means; and

    the computer connected thereto,

    the computer program being for causing the computer to execute the steps of:

        receiving destruction trigger information for starting a processing of preventing the encrypted data from being decrypted from the destruction trigger input means; and

        causing an irreversible change in the environmental information contained in the encrypted data when the destruction trigger information is received.

19. A computer program for a computer as a decryptionprocessing apparatus used in combination with an encryption processing apparatus for encrypting plaintext data to be processed to obtain encrypted data, the encryption processing apparatus comprising:

    dividing means for dividing the data to be processed into a plurality of pieces of divisional plaintext data, each being composed of a predetermined number of bits;

    solution generating means for continuously generating solutions, each being uniquely determined based on previous solutions, the solution generating means storing an initial solution used for generating a first solution, for continuously generating the solutions;

    encryption means for encrypting the divisional plaintext data by using the solutions to convert the divisional plain text data into divisional encrypted data;

    timing specifying information generating means for generating timing specifying information for specifying timing to prevent the encrypted data containing the timing specifying information from being decrypted; and

    connection means for connecting the divisional encrypted data to obtain the encrypted data containing the timing specifying information,

    the decryption processing apparatus comprising:

    a decryption unit comprising:

        dividing means for dividing the encrypted data into a plurality of pieces of divisional encrypted data, each being composed of a predetermined number of bits;

        solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions;

        decryption means for decrypting the divisional encrypted data by using the solutions to convert the divisional encrypted data into divisional plain text data; and

        connection means for connecting the divisional plaintext data to obtain the data to be processed; and

the computer connected thereto,
the computer program being for causing the computer to execute the steps of:

reading the timing specifying information from the encrypted data; and
monitoring whether or not the timing specified by the timing specifying information read in the step of reading the timing specifying information has come and causing an irreversible change in a solution generated prior to the solutions used for decrypting the encrypted data, the prior solution being necessary for generating the solutions used for decrypting the encrypted data, if the timing has come.

20. A computer program for a computer as a decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions and invariable environmental information to be contained in the encrypted data to be generated, the solution generating means storing an initial solution used for generating a first solution, for continuously generating the solutions;
encryption means for encrypting the divisional plaintext data by using the solutions to convert the divisional plain text data into divisional encrypted data;
timing specifying information generating means for generating timing specifying information for specifying timing to prevent the encrypted data containing the timing specifying information from being decrypted; and
connection means for connecting the divisional encrypted data to obtain the encrypted data containing the environmental information and the timing specifying information,
the decryption processing apparatus comprising:

a decryption unit comprising:

dividing means for dividing the encrypted data into a plurality of pieces of divisional encrypted data, each being composed of a predetermined number of bits;
solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed; and

the computer connected thereto,
the computer program being for causing the computer to execute the steps of:

reading the timing specifying information from the encrypted data; and
monitoring whether or not the timing specified by the timing specifying information read in the step of reading the timing specifying information has come and causing an irreversible change in the environmental information contained in the encrypted data if the timing has come.

21. A computer program for a computer as a decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;
solution generating means for continuously generating solutions, each being uniquely determined based on previous solutions, the solution generating means storing an initial solution used for generating a first solution, for continuously generating the solutions;
encryption means for encrypting the divisional plaintext data by using the solutions to convert the divisional plain text data into divisional encrypted data;

timing specifying information generating means for generating timing specifying information for specifying timing to prevent the encrypted data containing the timing specifying information from being decrypted; and

connection means for connecting the divisional encrypted data to obtain the encrypted data containing the timing specifying information,

the decryption processing apparatus comprising:

a decryption unit comprising:

dividing means for dividing the encrypted data into a plurality of pieces of divisional encrypted data, each being composed of a predetermined number of bits;

solution generating means for continuously generating solutions, each being uniquely determined based on previous solutions, the solutions being generated as the same solutions as the solutions generated in the encryption processing apparatus, the solution generating means storing an initial solution used for generating a first solution, for continuously generating the solutions;

decryption means for decrypting the divisional encrypted data by using the solutions to convert the divisional encrypted data into divisional plain text data; and

connection means for connecting the divisional plaintext data to obtain the data to be processed;

decryption trigger input means; and

the computer connected thereto,

the computer program being for causing the computer to execute the steps of:

receiving decryption trigger information for starting decryption of the encrypted data from the decryption trigger input means;

reading the timing specifying information from the encrypted data when the decryption trigger information is input from the decryption trigger input means; and

receiving the timing specifying information read in the step of reading the timing specifying information when the decryption trigger information is input to determine whether or not the timing specified by the timing specifying information has come and allowing the decryption unit to decrypt the encrypted data if the timing has not come yet while causing an irreversible change in a solution generated prior to the solutions used for decrypting the encrypted data, the prior solution being necessary for generating the solutions used for decrypting the encrypted data, if the timing has come.

22. A computer program for a computer as a decryption processing apparatus used in combination with an encryption processing apparatus for encrypting plaintext data to be processed to obtain encrypted data, the encryption processing apparatus comprising:

dividing means for dividing the data to be processed into a plurality of pieces of divisional plaintext data, each being composed of a predetermined number of bits;

solution generating means for continuously generating solutions, each being uniquely determined based on previous solutions and invariable environmental information to be contained in the encrypted data to be generated, the solution generating means storing an initial solution used for generating a first solution, for continuously generating the solutions;

encryption means for encrypting the divisional plaintext data by using the solutions to convert the divisional plain text data into divisional encrypted data;

timing specifying information generating means for generating timing specifying information for specifying timing to prevent the encrypted data containing the timing specifying information from being decrypted; and

connection means for connecting the divisional encrypted data to obtain the encrypted data containing the environmental information and the timing specifying information,

the decryption processing apparatus comprising:

a decryption unit comprising:

dividing means for dividing the encrypted data into a plurality of pieces of divisional encrypted data, each being composed of a predetermined number of bits;

solution generating means for continuously generating solutions, each being uniquely determined based on previous solutions and the environmental information contained in and read from the encrypted data, the solutions being generated as the same solutions as the solutions generated in the encryption processing apparatus, the solution generating means storing an initial solution used for generating a first solution, for continuously generating the solutions;
decryption means for decrypting the divisional encrypted data by using the solutions to convert the divisional encrypted data into divisional plain text data; and
connection means for connecting the divisional plaintext data to obtain the data to be processed;

decryption trigger input means; and
the computer connected thereto,
the computer program being for causing the computer to execute the steps of:

receiving decryption trigger information for starting decryption of the encrypted data from the decryption trigger input means;
reading the timing specifying information from the encrypted data when the decryption trigger information is input from the decryption trigger input means; and
receiving the timing specifying information read in the step of reading the timing specifying information when the decryption trigger information is input to determine whether or not the timing specified by the timing specifying information has come and allowing the decryption unit to decrypt the encrypted data if the timing has not come yet while causing an irreversible change in the environmental information contained in the encrypted data if the timing has come.

FIG. 1

1

| DISPLAY DEVICE 26 | CPU 21 | RAM 24 | COMMUNICATION DEVICE 28 | ↔ NETWORK |

29 BUS

| INPUT DEVICE 25 | ROM 22 | HDD 23 | ENCRYPTION DEVICE 27 |

FIG. 2

FIG. 3

(A)

| HEADER DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA |
| 501 | 502 | 502 | 502 | 502 | 502 | 502 | 502 | 502 | 502 | 502 | 502 | 502 |

(B)

| HEADER DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA | DIVISIONAL ENCRYPTED DATA |
| 501 | 502 | 502 | 502 | 502 | 502 | 502 | 502 | 502 | 502 | 502 | 502 | 502 |

| DIVISIONAL PLAINTEXT DATA | DIVISIONAL PLAINTEXT DATA | DIVISIONAL PLAINTEXT DATA | DIVISIONAL PLAINTEXT DATA | DIVISIONAL PLAINTEXT DATA | DIVISIONAL PLAINTEXT DATA | DIVISIONAL PLAINTEXT DATA | DIVISIONAL PLAINTEXT DATA | DIVISIONAL PLAINTEXT DATA | DIVISIONAL PLAINTEXT DATA | DIVISIONAL PLAINTEXT DATA | DIVISIONAL PLAINTEXT DATA |
| 503 | 503 | 503 | 503 | 503 | 503 | 503 | 503 | 503 | 503 | 503 | 503 |

K

FIG. 4

FIG. 5

FIG. 6

FIG. 7

START

READ OUT DATA TO BE PROCESSED — S1101

INPUT DESTINATION INFORMATION AND
INFORMATION FOR GENERATING
TIMING SPECIFYING INFORMATION — S1102

GENERATE HEADER DATA — S1103

DIVIDE DATA TO BE PROCESSED TO
GENERATE DIVISIONAL PLAINTEXT DATA — S1104

ENCRYPT DIVISIONAL PLAINTEXT DATA TO
GENERATE DIVISIONAL ENCRYPTED DATA — S1105

GATHER HEADER DATA AND
DIVISIONAL ENCRYPTED DATA INTO UNIT
TO GENERATE ENCRYPTED DATA — S1106

END

FIG. 8

START

RECEIVE ENCRYPTED DATA  S1301

EXTRACT HEADER DATA FROM ENCRYPTED DATA  S1302

ANALYZE CONTENT INDICATED BY SPECIFYING INFORMATION  S1303

GENERATE SOLUTION  S1304

GENERATE ALGORITHM AND KEY FOR DECRYPTING DIVISIONAL ENCRYPTED DATA  S1305

DECRYPT DIVISIONAL ENCRYPTED DATA  S1306

CONNECT DIVISIONAL PLAINTEXT DATA TO GENERATE DATA TO BE PROCESSED  S1307

END

FIG. 9

<div style="text-align:center">**INTERNATIONAL SEARCH REPORT**</div>

| | International application No. |
|---|---|
| | PCT/JP2007/075375 |

| A. CLASSIFICATION OF SUBJECT MATTER |
|---|
| *H04L9/14*(2006.01)i, *H04L9/26*(2006.01)i |

According to International Patent Classification (IPC) or to both national classification and IPC

| B. FIELDS SEARCHED |
|---|

Minimum documentation searched (classification system followed by classification symbols)
H04L9/14, H04L9/26

Documentation searched other than minimum documentation to the extent that such documents are included in the fields searched

| | | |
|---|---|---|
| Jitsuyo Shinan Koho | 1922-1996 | Jitsuyo Shinan Toroku Koho 1996-2008 |
| Kokai Jitsuyo Shinan Koho | 1971-2008 | Toroku Jitsuyo Shinan Koho 1994-2008 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2003-101529 A (Toshiba Corp.), 04 April, 2003 (04.04.03), | 3,5,13,15, 19,21 |
| Y | Par. Nos. [0042] to [0050], [0057], [0058] (Family: none) | 1,2,4,6-12, 14,16-18,20, 22 |
| Y | JP 2004-13763 A (Toshiba Corp.), 15 January, 2004 (15.01.04), Par. No. [0044] (Family: none) | 1,2,7,9-12, 17,18 |
| Y | JP 11-27255 A (Canon Inc.), 29 January, 1999 (29.01.99), Par. Nos. [0023] to [0039] & US 6307940 B1 | 2,4,6,8,12, 14,16,18, |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 29 January, 2008 (29.01.08) | 05 February, 2008 (05.02.08) |

| Name and mailing address of the ISA/ | Authorized officer |
|---|---|
| Japanese Patent Office | |
| Facsimile No. | Telephone No. |

Form PCT/ISA/210 (second sheet) (April 2007)